# EUROPEAN PATENT APPLICATION

(11) **EP 3 016 321 A1**
(43) Date of publication of application: **04.05.2016**
(21) Application number: 14817170.5
(22) Date of filing: 24.06.2014
(51) Int. Cl.: H04L 12/70

(54) **COMMUNICATION SYSTEM, APPARATUS, METHOD AND PROGRAM**

(30) Priority: 25.06.2013 JP 2013133050
(71) Applicant: NEC Corporation, Tokyo 108-8001 (JP)
(72) Inventor: ITSUMI, Hayato, Tokyo 108-8001 (JP); CHIBA, Yasunobu, Tokyo 108-8001 (JP)
(74) Representative: Reeve, Nicholas Edward
(86) International application number: PCT/JP2014/066668
(87) International publication number: WO 2014/208538

(57) **Abstract**

The present invention allows the distribution of the load over the entire network. A communication control apparatus (500) in a communication system in which a virtual machine (VM) performs a communication function of a hardware appliance used in a communication network comprises first means (501) for selecting a forwarding destination of a packet (503) that is forwarded towards a plurality of paths (504₁ to 504ₙ) in order to establish a communication session with the communication function, from a plurality of the virtual machines (VM), and second means (502) for forwarding the packet to a selected virtual machine (VM).

## Description

### FIELD

### [Reference to Related Application]

The present invention is based upon and claims the benefit of the priority of Japanese patent application No. 2013-133050 filed on June 25th, 2013, the disclosure of which is incorporated herein in its entirety by reference thereto.

The present invention relates to a communication system, apparatus, method, and program.

### BACKGROUND

There has been a growing interest in virtualization of a network appliance using server virtualization technology or the like developed by IT (Intelligent Technology) technology in networks as well, such as SDN (Software Defined Network) technology that allows a network to be controlled by software, or "NFV" (Network Functions Virtualization) configured to virtualize a network function such as a core network (Core Network), or the like. A lot of dominant telecommunications carriers, vendors, and so on participate in an NFV group of a European standardization organization "ETSI" (European Telecommunications Standards Institute), for example. Various appliances (devices) included in a network (network) of a telecommunications carriers, that are functions of a mobile core, such as MME (Mobility Management Entity), S-GW (Serving-Gateway), P-GW (PDN (Packet data network)-Gateway), router, large scale NAT (Large Scale Network Address Translations: LSN), HLR (Home Location Register), RNC (Radio Network Controller)/eNodeB, firewall, and authentication server, are currently each constituted from a dedicated apparatus.

In NFV, a reduction in equipment cost and operation cost is achieved by implementation of the function by a server virtualization technology using a general-purpose server, for example. By adding a resource for an increase in a communication load such as a control signal, fault tolerance can be increased.

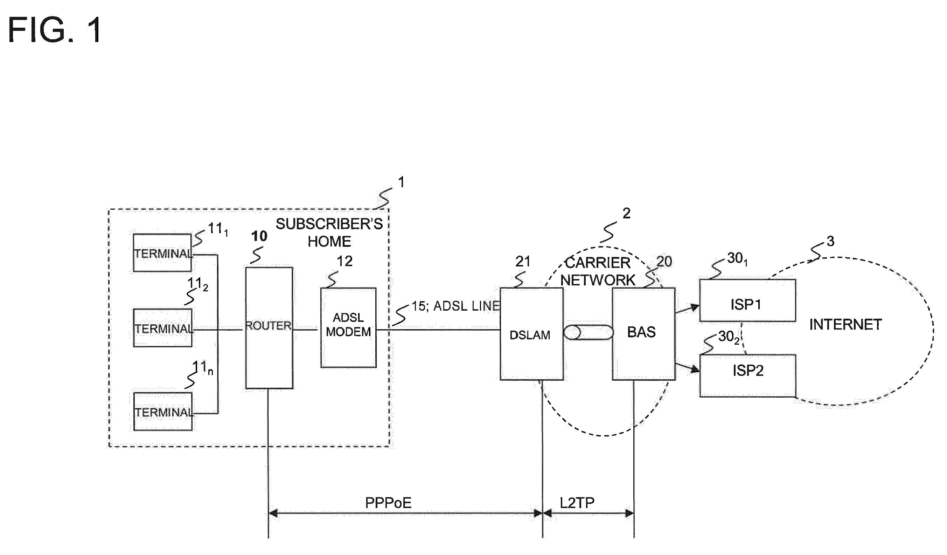

Fig. 1 is a diagram schematically illustrating a carrier network. Since this carrier network is an example of a network to which exemplary embodiments described later can be applied, related technologies thereof will be described.

Fig. 1 schematically illustrates an example connected by PPPoE (Point to Point Protocol over Ethernet (registered trademark)). For instance, reference may be made to Non-Patent Literature 1 with regard to PPPoE. Terminals 11ₗ to 11ₙ in a subscriber's home are connected to a DSLAM (Digital Subscriber Line Access Multiplexer) 21 in a central telephone exchange via a router 10, an ADSL (Asymmetric Digital Subscriber Line) modem 12, and an ADSL line 15. A BAS (Broadband Access Server) 20 is an access server having router functions and performs switching of providers 30 and manages bandwidth according to a connection authentication from a user and provider identifier. The DSLAM 21 is a layer 2 (L2) multiplexer that bundles a plurality of ADSL lines into one. Further, the BAS may be a BRAS (Broadband Remote Access Server). In the description below, ADSL is used, but FTTH (Fiber To The Home) may be used instead (In this case, the modem is unnecessary and as the router, a router for FTTH is adopted).

In a PPPoE connection, the router 10 (client) in the subscriber's home is bridge-connected to the access server BAS 20, making a PPP (Point to Point Protocol) connection. The BAS 20 recognizes the provider (ISP: Internet Service Provider) to which the connection is made using a user account (for instance, "user ID@provider identifier"), authenticates the user, and forwards user data to a connection point with the provider. A PPPoE tunnel is set up from the router 10 to the DSLAM 21, and a L2TP (Layer 2 Tunneling Protocol) tunnel is established between the DSLAM 21 and the BAS 20.

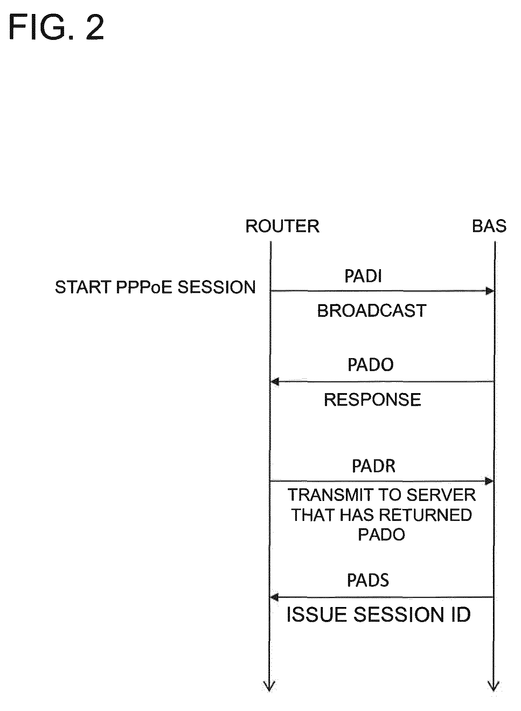

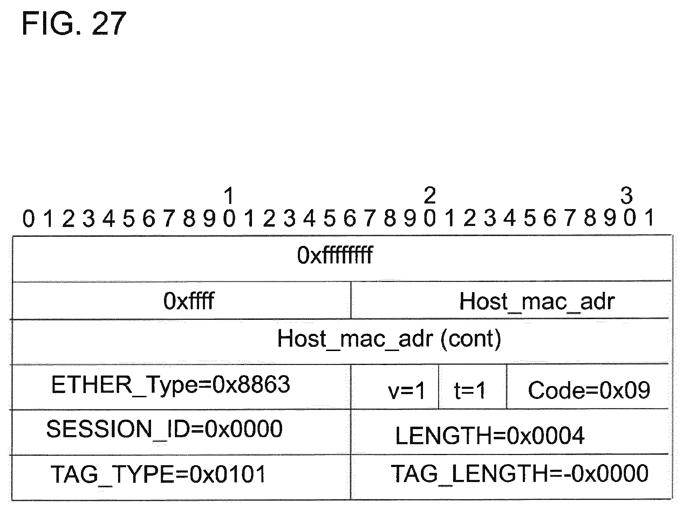

Fig. 2 is a diagram illustrating a sequence operation during a PPPoE discovery stage. A PPPoE session starts with PADI (PPPoE Active Discovery Initiation) packet transmission from a router that is a PPPoE client. The PADI packet is a broadcast packet that has a header with a destination MAC address (48 bits) set to all "1"s, as illustrated in a header format example in Fig. 27.

Upon reception of a serviceable PADI packet, the BAS returns a response packet PADO (PPPoE Active Discovery Offer) to the router (10 in Fig. 1) that is a host that has transmitted the PADI packet.

The router transmits a PADR (PPPoE Active Discovery Request) to the BAS that is a transmission source of the received PADO, via unicast, and then starts a session with the BAS to which the PADR is transmitted. Note that the explanation of the process after the router has transmitted the PADR until the start of the session will be omitted.

### CITATION LIST

### NON-PATENT LITERATURE

[Non-Patent Literature 1] L. Mamakos, et al. "A Method for Transmitting PPP Over Ethernet (PPPoE)" [searched on April 1st, 2013], the Internet < URL:http://www.ietf.org/rfc/rfc2516.txt>

### SUMMARY

### TECHNICAL PROBLEM

The following describes an analysis of the related technologies.

As described above, NFV achieves the virtualization of network appliances by implementing a network appliance of a telecommunications operator on a virtual machine provided on a virtualization infrastructure of a general-purpose server.

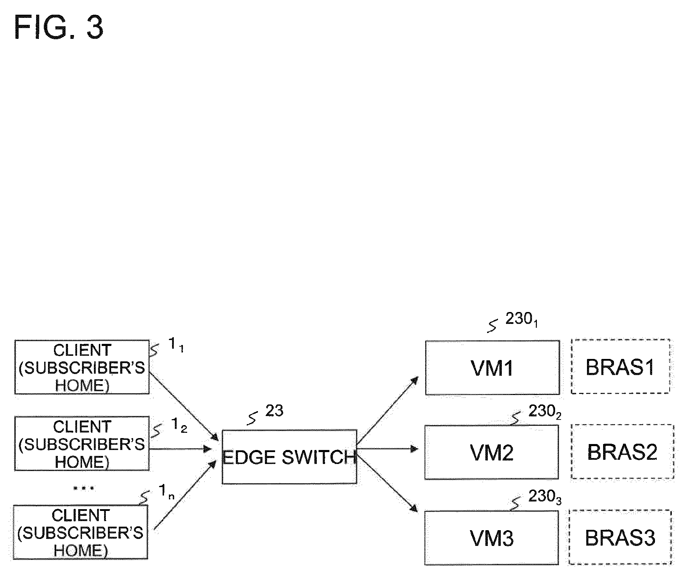

Fig. 3 is a diagram illustrating a configuration (prototype) in which BRAS/BAS are virtualized. As illustrated in Fig. 3, BRAS functions (BRAS 1, 2, and 3) are achieved by software programs running on respective virtual machines (VM) 230₁, 230₂, and 230₃, operated on a virtualization infrastructure of a server.

As illustrated in Fig. 3, in the case where a BRAS/BAS is virtualized, since a general-purpose apparatus (virtual machines on a general-purpose server) is used instead of a dedicated apparatus that is customized to only perform the function of a BRAS/BAS, a processing performance of the BRAS/BAS is lower as compared to the case where dedicated apparatus is used.

Therefore, when a BRAS/BAS is virtualized, load balancing of the number of sessions (the number of clients) accommodated by each BRAS/BAS must be performed with the processing performance of the BRAS/BAS taken into account.

In a current PPPoE protocol, a broadcast packet called PADI establishes a session as described with reference to Fig. 2. In other words, a client transmits a PADI, and if a plurality of BRAS/BASs respond, the client selects one of them and then establish a session.

In the current PPPoE protocol, in response to responses from a plurality of BRAS/BASs, it is not possible to select a BRAS/BAS to establish a session with. As a result, it is difficult to distribute the load on the BRAS/BASs in the current PPPoE protocol.

Accordingly, the present invention is devised to solve the problem above, and it is an object thereof to provide a system, apparatus, method, and program enabling load balancing over an entire network.

### SOLUTION TO PROBLEM

According to one (aspect 1) of aspects of the present invention, there is provided a communication control apparatus in a communication system in which a virtual machine performs a communication function of a hardware appliance used in a communication network comprising first means for selecting a forwarding destination of a packet that is forwarded towards a plurality of paths in order to establish a communication session with the communication function, from a plurality of the virtual machines, and second means for forwarding the packet to a selected virtual machine.

According to another aspect (aspect 2), there is provided a communication control method in a communication system in which a virtual machine performs a communication function of a hardware appliance used in a communication network comprising selecting a forwarding destination of a packet that is forwarded towards a plurality of paths in order to establish a communication session with the communication function, from a plurality of the virtual machines, and forwarding the packet to a selected virtual machine.

According to yet another aspect (aspect 3), there is provided a communication control program causing a communication control apparatus in a communication system in which a virtual machine performs a communication function of a hardware appliance used in a communication network, to execute:
a process of selecting a forwarding destination of a packet that is forwarded towards a plurality of paths in order to establish a communication session with the communication function, from a plurality of the virtual machines; and
a process of forwarding the packet to a selected virtual machine.

According to yet another aspect (aspect 4), there is provided a computer-readable medium (semiconductor memory, magnetic/optical disk, etc.) storing the program according to the aspect 3.

According to yet another aspect, there is provided a communication control apparatus in a communication system in which a virtual machine performs a communication function of a hardware appliance used in a communication network comprising first means for selecting a forwarding destination of a packet that is forwarded towards a plurality of paths in order to establish a communication session with the communication function, from a plurality of the virtual machines, and second means for instructing a network switch to forward the packet to a selected virtual machine.

According to yet another aspect, there is provided a communication apparatus in a communication system in which a virtual machine performs a communication function of a hardware appliance used in a communication network comprises means for identifying a packet that is forwarded towards a plurality of paths in order to establish a communication session with the communication function, and means for aggregating the packet identified in an apparatus that forwards the packet to a virtual machine selected from a plurality of the virtual machines.

According to yet another aspect, there is provided an information processing apparatus, in which a virtual machine that performs a communication function of a hardware appliance used in a communication network is provided, comprising means for operating a virtual switch that includes a function of a network switch, and the virtual switch comprises forwarding means for forwarding a packet that is forwarded towards a plurality of paths in order to establish a communication session with the communication function, to a virtual machine selected from a plurality of the virtual machines.

According to yet another aspect, there is provided a communication system (method or program) comprising means for (a step or process of) selecting at least one forwarding destination for a packet that is forwarded towards a plurality of paths when at least one such packet is received, and forwarding the packet to a selected forwarding destination.

### ADVANTAGEOUS EFFECTS OF INVENTION

According to the present invention, it becomes possible to balance the load in a network system.

### BRIEF DESCRIPTION OF THE DRAWINGS

[Fig.1]
   Fig. 1 is a schematic diagram illustrating a PPPoE connection.
[Fig.2]
   Fig. 2 is a diagram illustrating a PPPoE discovery stage.
[Fig.3]
   Fig. 3 is a diagram illustrating a prototype example.
[Fig.4]

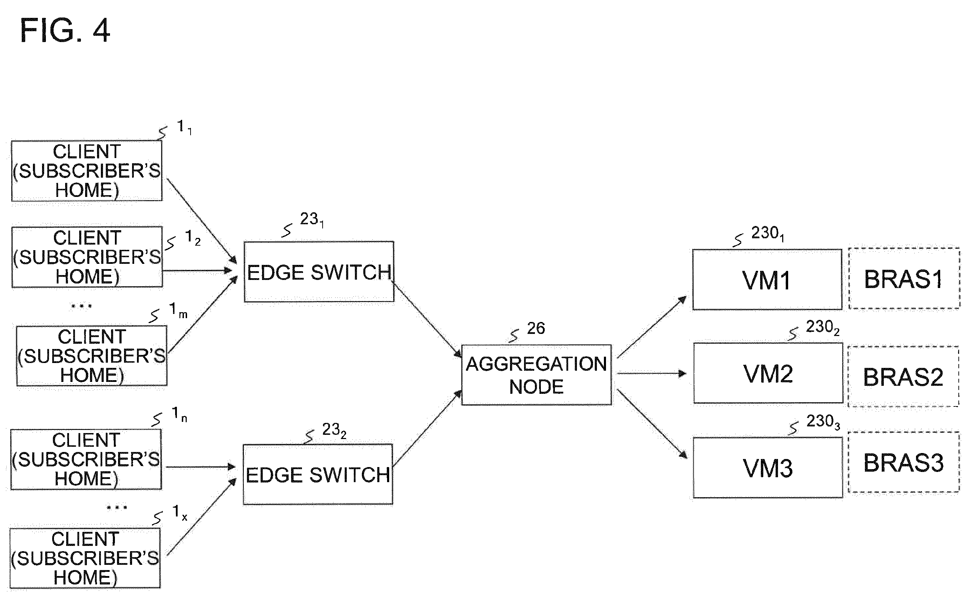

   Fig. 4 is a diagram illustrating an exemplary embodiment.
[fig.5]

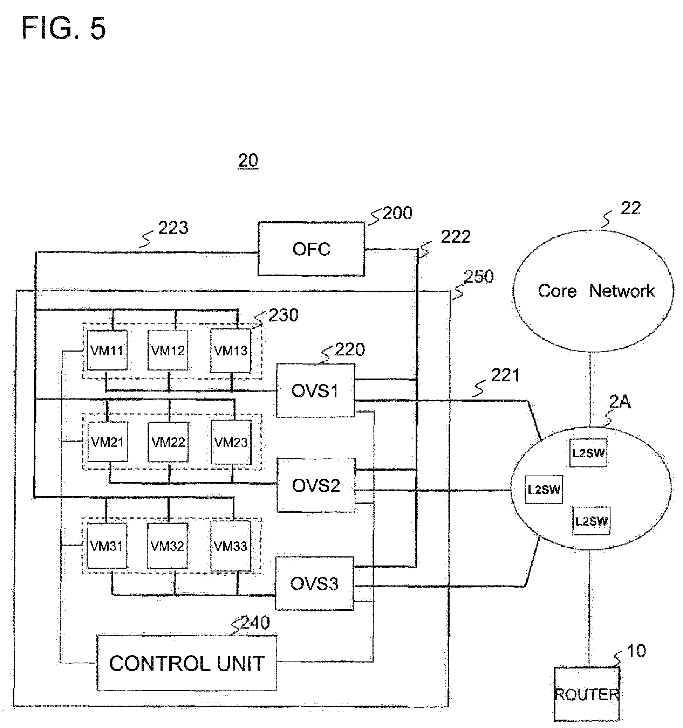

   Fig. 5 is a diagram illustrating virtualized network functions in Exemplary Embodiment 1 of the present invention.
[Fig.6]

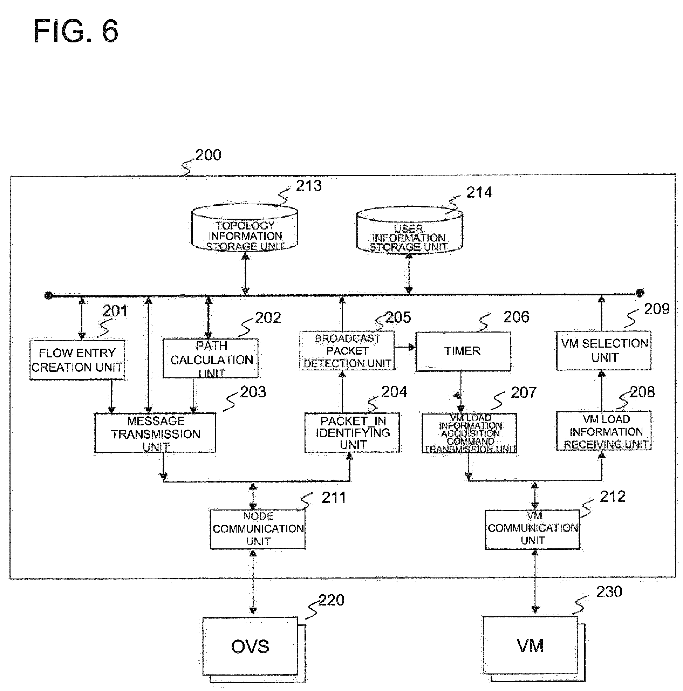

   Fig. 6 is a diagram illustrating the configuration of an OFC of Exemplary Embodiment 1 of the present invention.
[Fig.7]

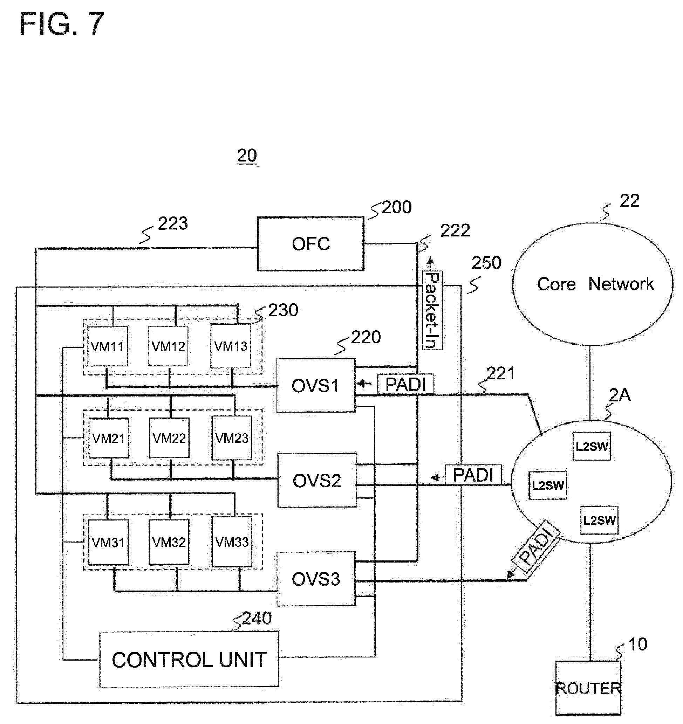

   Fig. 7 is an explanatory diagram schematically illustrating the operation of Exemplary Embodiment 1 of the present invention.
[Fig.8]

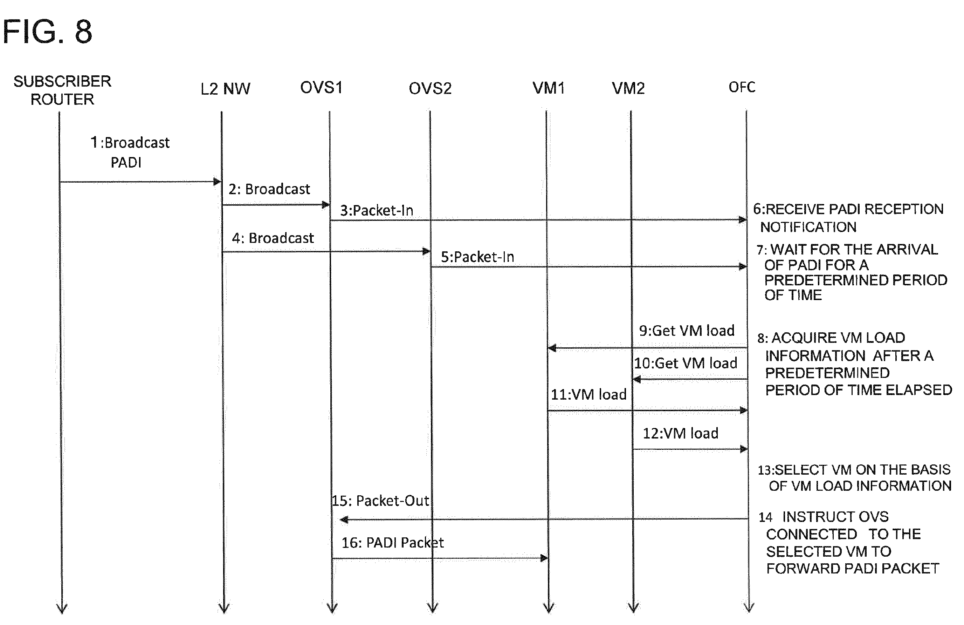

   Fig. 8 is a diagram illustrating a sequence operation of Exemplary Embodiment 1 of the present invention.
[Fig.9]

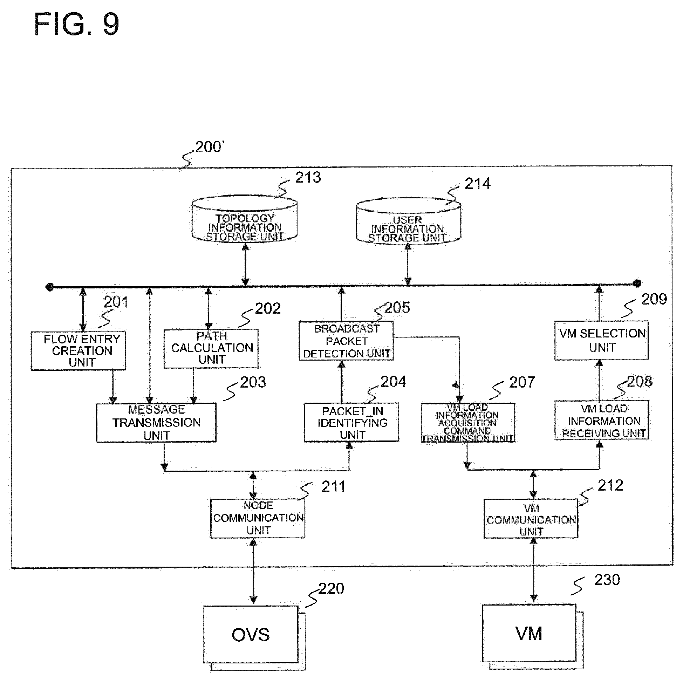

   Fig. 9 is a diagram illustrating the configuration of a modification example of the OFC of Exemplary Embodiment 1 of the present invention.
[fig.10]

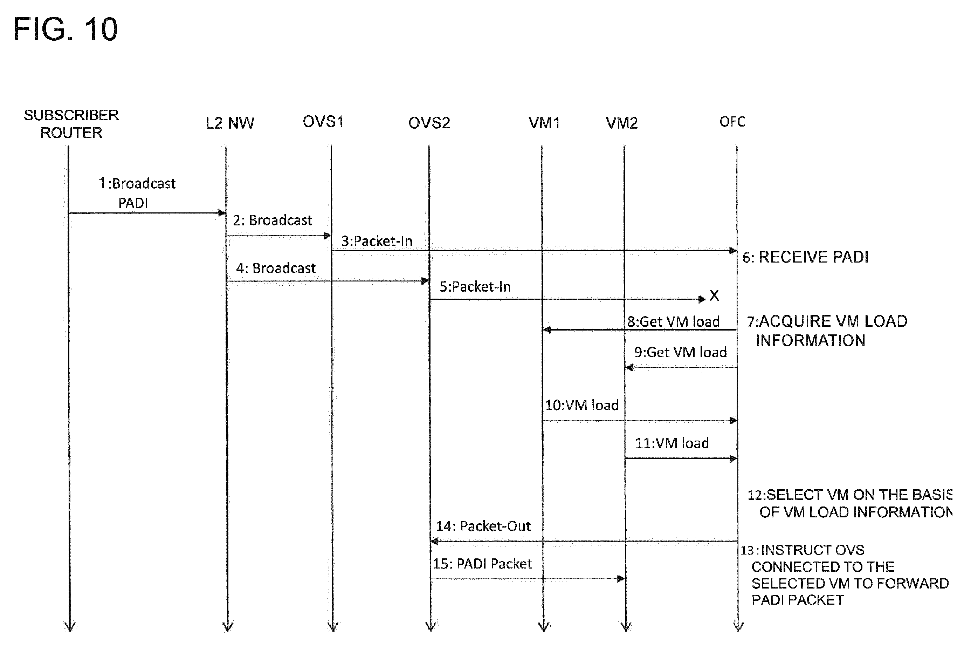

   Fig. 10 is a diagram illustrating a sequence operation of the modification of Exemplary Embodiment 1 of the present invention.
[Fig.11]

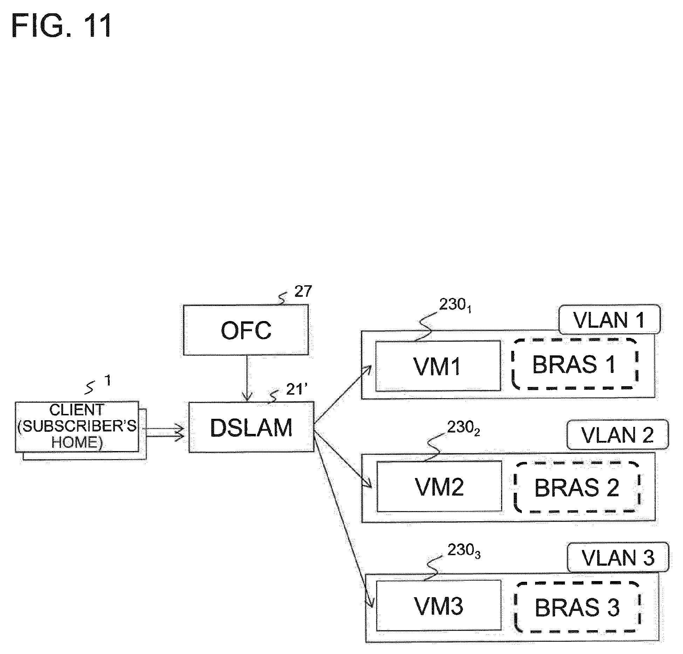

   Fig. 11 is a diagram illustrating Exemplary Embodiment 2 of the present invention.
[Fig.12]

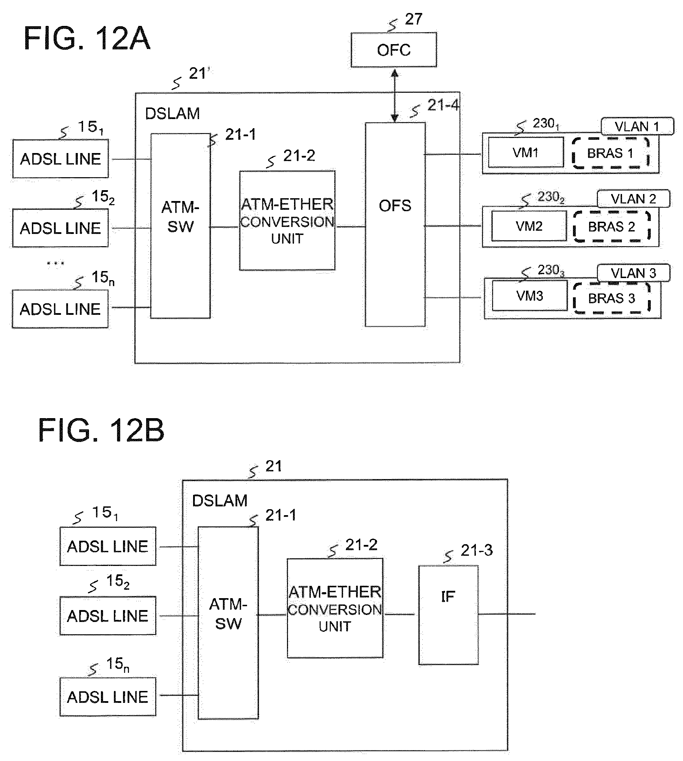

   Figs. 12A and 12B are diagrams illustrating Exemplary Embodiment 2 and a DSLAM, a related technology, respectively.
[fig.13]

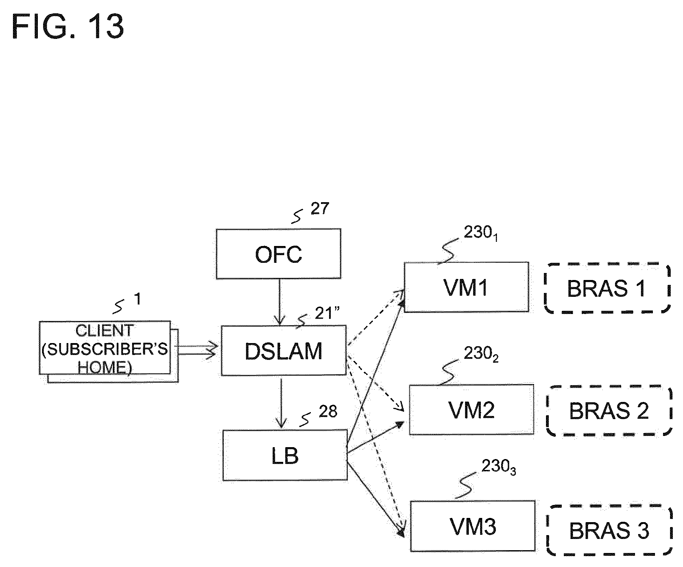

   Fig. 13 is a diagram illustrating Exemplary Embodiment 3 of the present invention.
[fig.14]

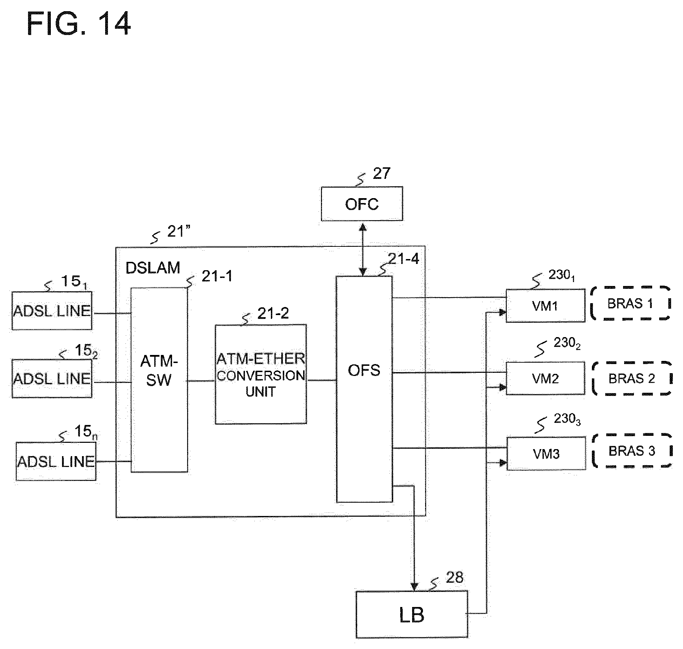

   Fig. 14 is a diagram illustrating a DSLAM of Exemplary Embodiment 3 of the present invention.
[Fig.15]

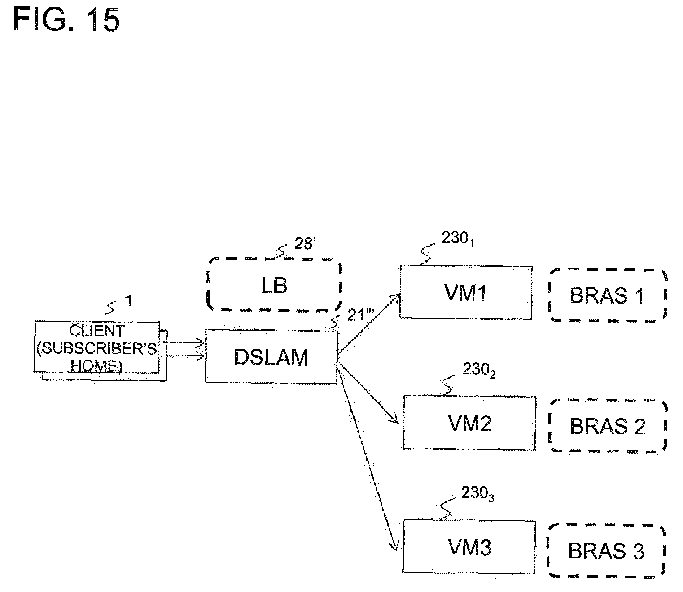

   Fig. 15 is a diagram illustrating Exemplary Embodiment 4 of the present invention.
[Fig.16]

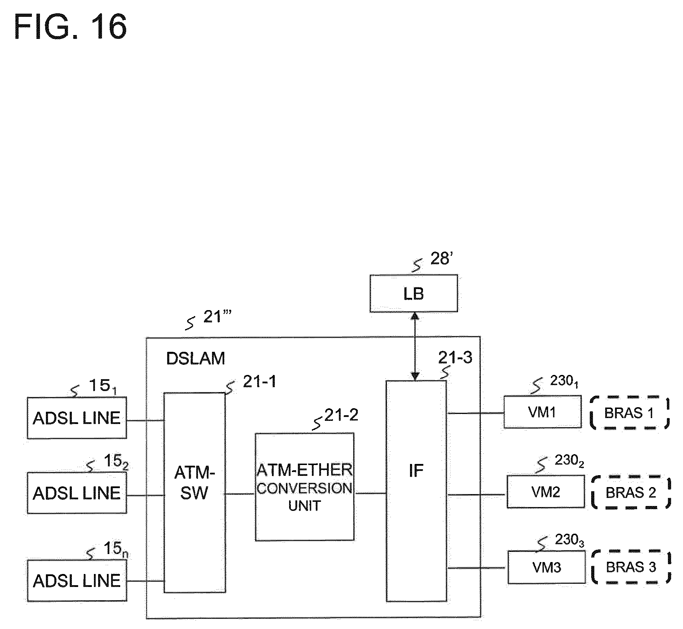

   Fig. 16 is a diagram illustrating a DSLAM of Exemplary Embodiment 4 of the present invention.
[fig.17]

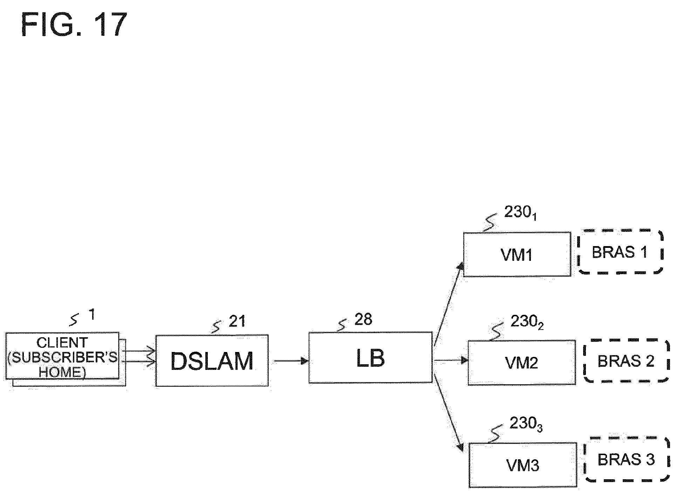

   Fig. 17 is a diagram illustrating Exemplary Embodiment 5 of the present invention.
[Fig.18]

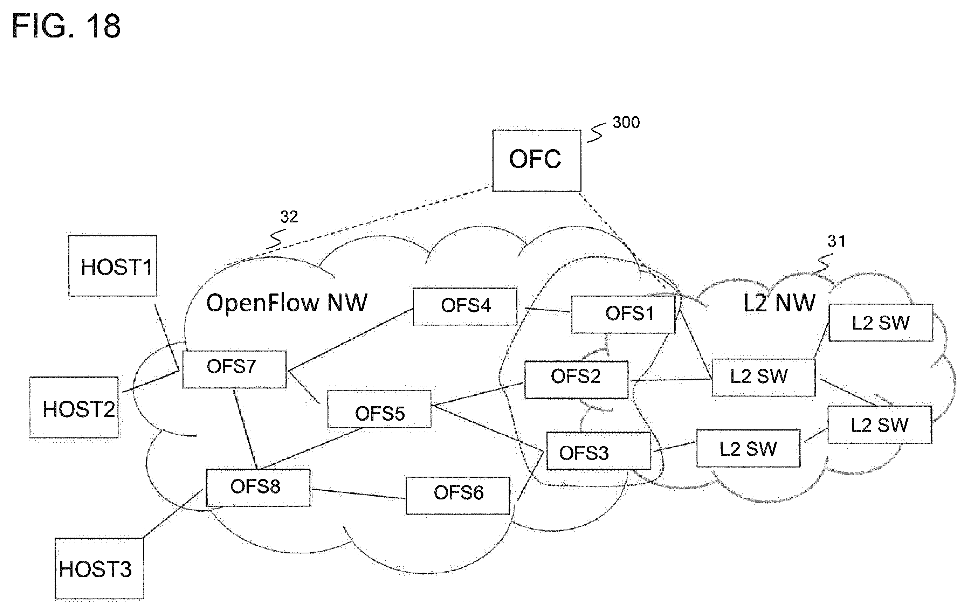

   Fig. 18 is a diagram illustrating Exemplary Embodiment 6 of the present invention.
[fig.19]

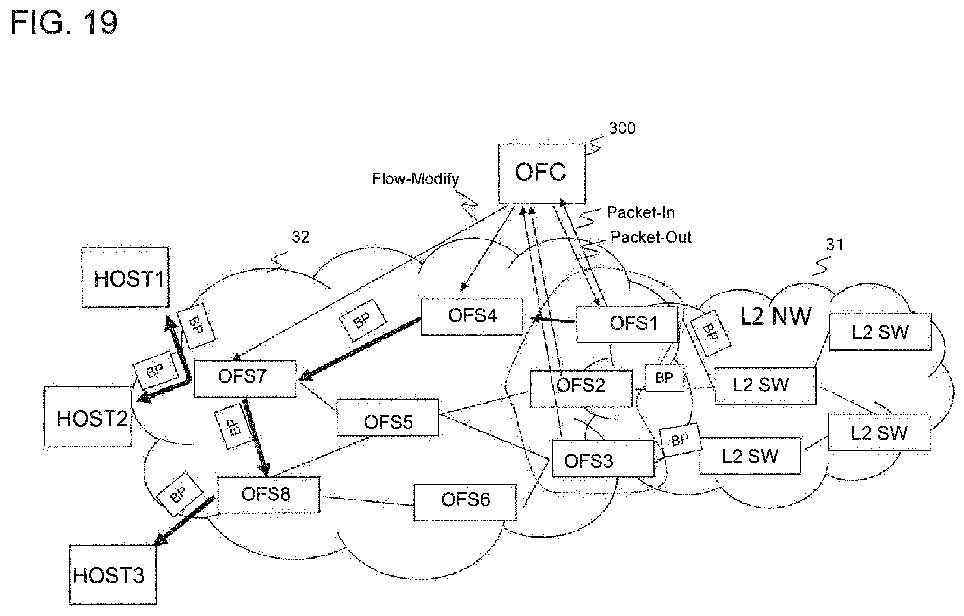

   Fig. 19 is a diagram for schematically explaining Exemplary Embodiment 6 of the present invention.
[Fig.20]
   Fig. 20 is a diagram illustrating the configuration of an OFC of Exemplary Embodiment 6 of the present invention.
[Fig.21] Fig. 21 is a diagram illustrating a sequence operation of Exemplary Embodiment 6 of the present invention.
[Fig.22]

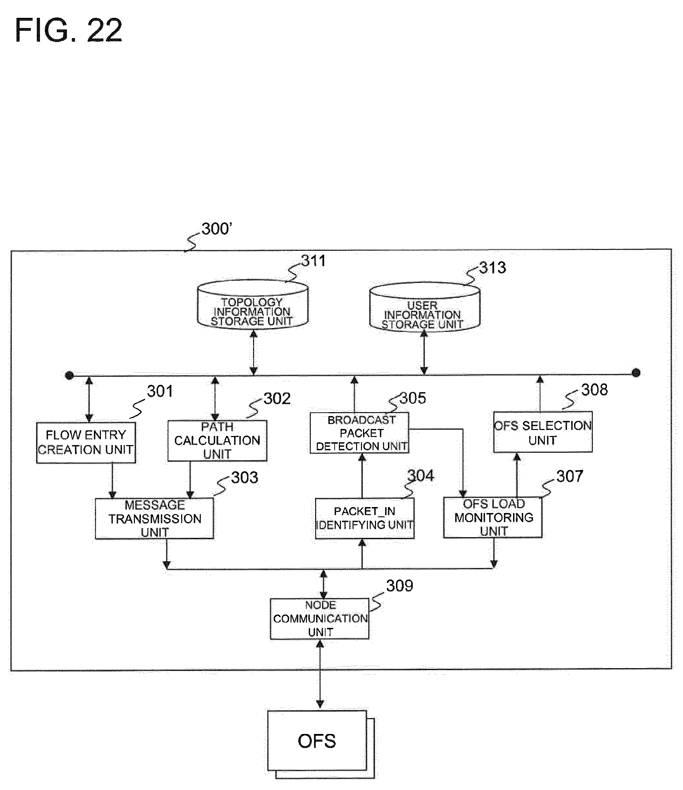

   Fig. 22 is a diagram illustrating the configuration of a modification of the OFC of Exemplary Embodiment 6 of the present invention.

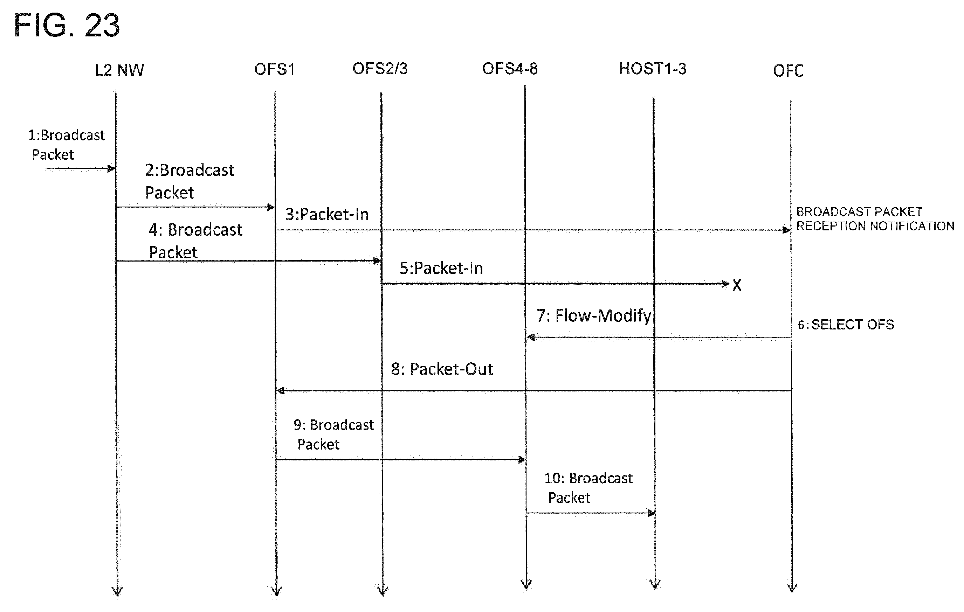

[Fig.23] Fig. 23 is a diagram illustrating a sequence operation of the modification of Exemplary Embodiment 6 of the present invention.
[Fig.24]

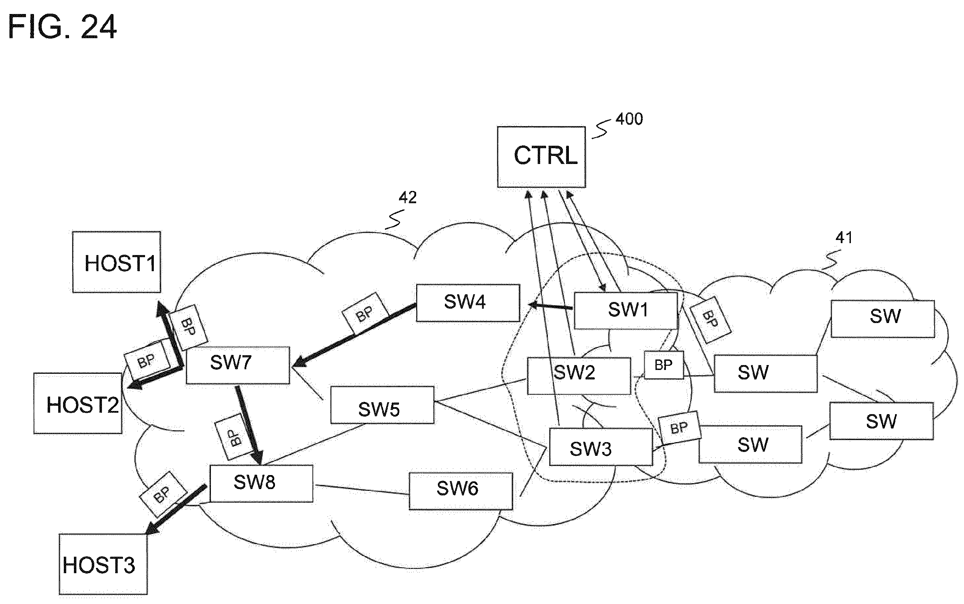

   Fig. 24 is an explanatory diagram schematically illustrating the operation of Exemplary Embodiment 7 of the present invention.
[Fig.25]

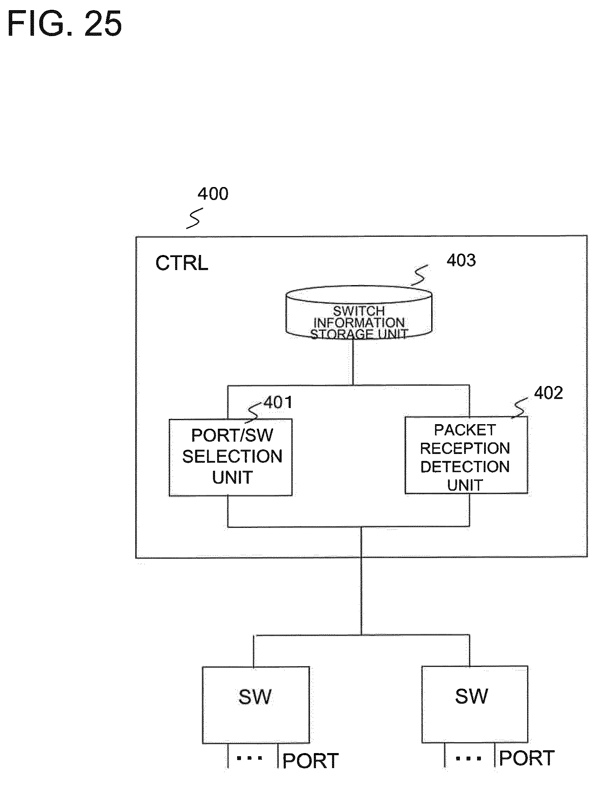

   Fig. 25 is a diagram illustrating the configuration of a controller of Exemplary Embodiment 7 of the present invention.
[Fig.26]

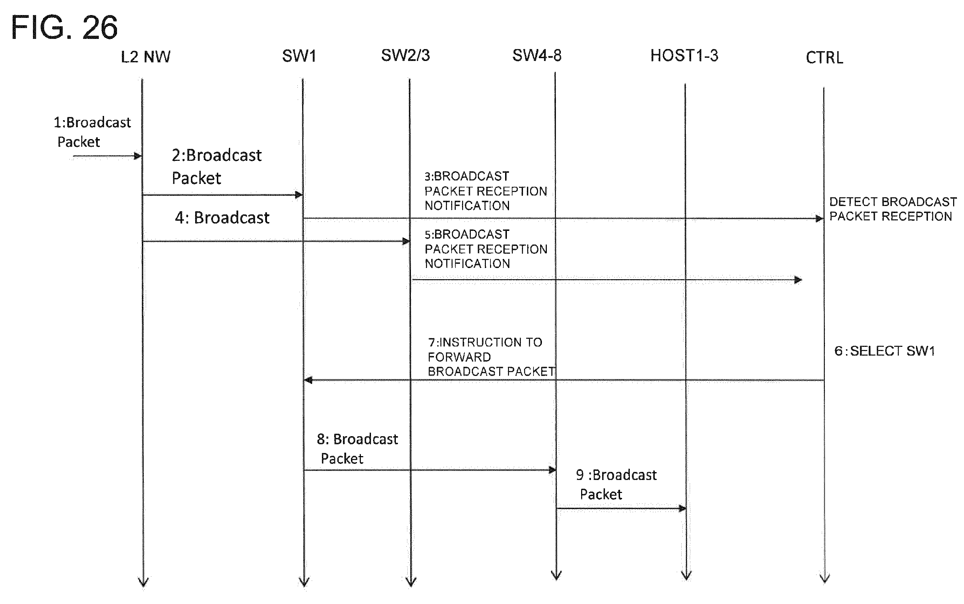

   Fig. 26 is a diagram illustrating a sequence operation of a modification of Exemplary Embodiment 7 of the present invention.
[Fig.27]
   Fig. 27 is a diagram illustrating a format of a PADI packet.
[Fig.28]

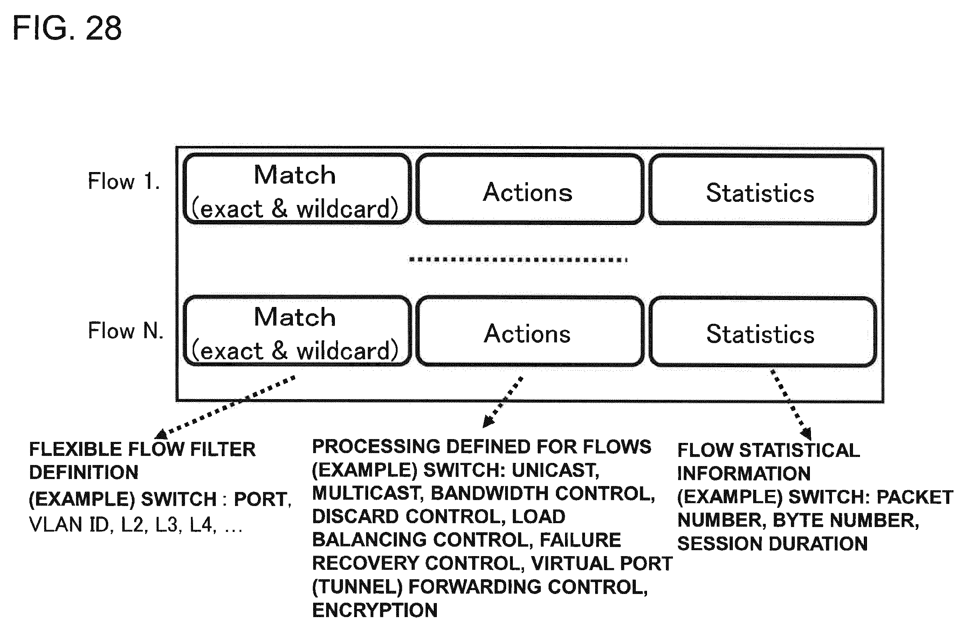

   Fig. 28 is a diagram illustrating a flow entry.
[Fig.29]

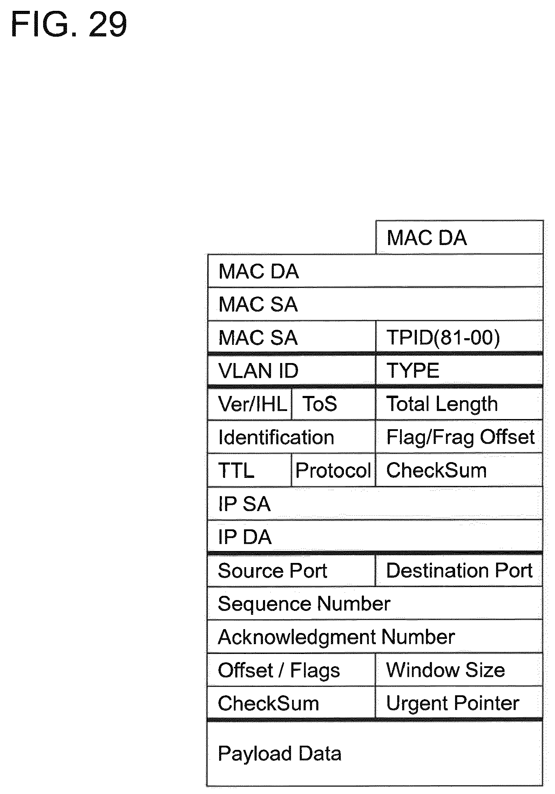

   Fig. 29 is a diagram illustrating a packet header.
[Fig.30]

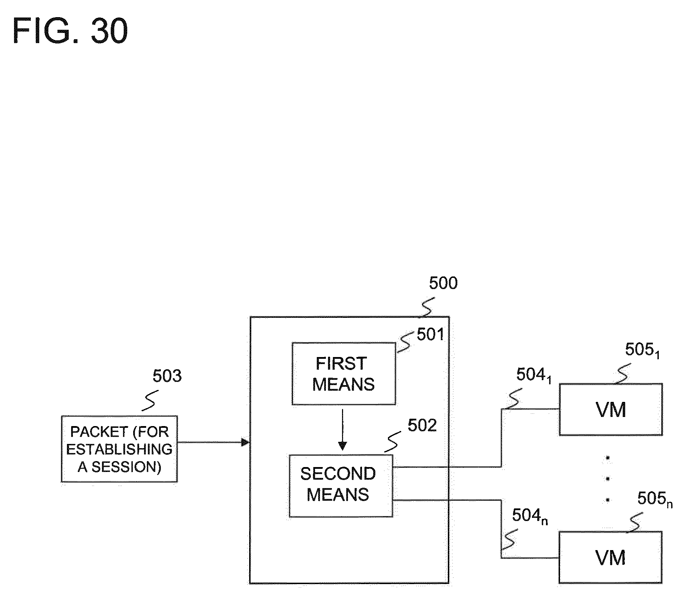

   Fig. 30 a diagram illustrating the basic concept of the present invention.
[Fig.31]

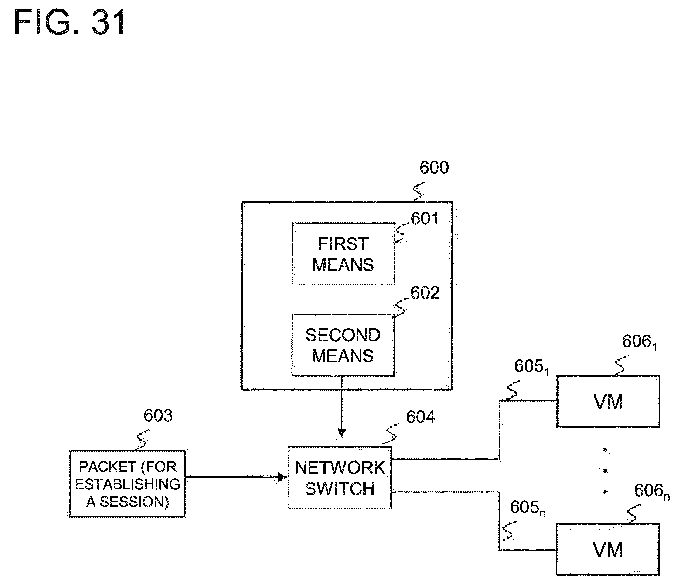

   Fig. 31 a diagram illustrating the basic concept of the present invention.
[Fig.32]

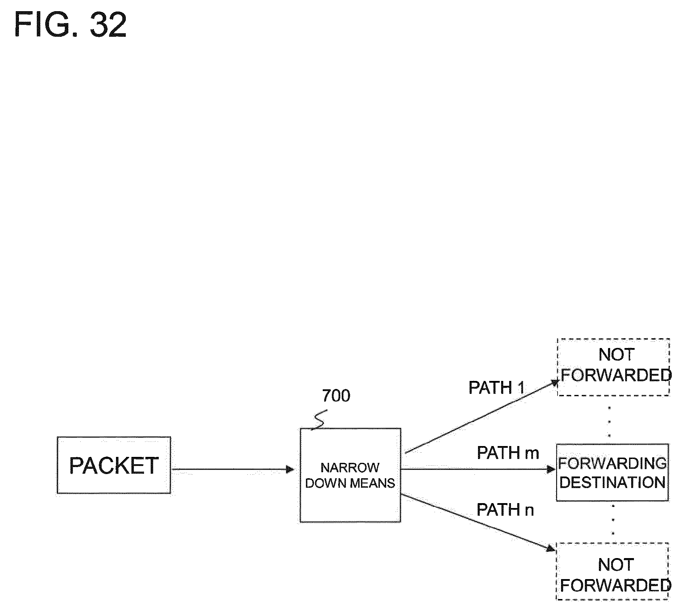

   Fig. 32 a diagram illustrating the basic concept of the present invention.

### DETAILED DESCRIPTION

The following describes the basic concept of the present invention. According to preferred modes of the present invention, with reference to Fig. 30, a communication control apparatus (500) in a communication system in which a virtual machine performs a communication function of a hardware appliance used in a communication network, comprises
first means (501) for selecting a forwarding destination of a packet (503) that is forwarded towards a plurality of paths (504₁ to 504ₙ where n is a predetermined positive integer not smaller than 2) in order to establish a communication session with the communication function, from a plurality of the virtual machines (VM: 505₁ to 505ₙ), and
second means (502) for forwarding the packet (503) to a selected virtual machine (VM).

The first means (501) may select a forwarding destination of the packet aggregated in the communication control apparatus (500) from a plurality of the virtual machines.

The first means (501, or for instance, corresponding to an OFC 200 in Fig. 5) may receive the packet from a network switch (not shown in Fig. 30, but for instance, an OVS 220 in Fig. 5) having a function of aggregating packets (503) in the communication control apparatus (500) and select a forwarding destination of the received packet, from a plurality of the virtual machines.

The first means (501) may select a forwarding destination of the packet in such a manner that forwarding destinations of the packets are distributed among a plurality of the virtual machines.

The first means (501) may select a forwarding destination of the packet according to operating conditions of a plurality of the virtual machines.

The first means (501) may receive the packet from a network switch (not shown in Fig. 30, but for instance OVS 220 in Fig. 5) that operates according to an instruction from the communication control apparatus (500) and select a forwarding destination of the received packet, from a plurality of the virtual machines.

The first means (501) may receive a request for an instruction regarding a packet from the network switch (for instance, OVS 220 in Fig. 5), when an instruction corresponding to a method for processing the packet is unknown, and select a forwarding destination of each packet received from a plurality of the virtual machines according to the request.

The first means (501) may receive the packet forwarded according to an instruction from the communication control apparatus (500) from the network switch and select a forwarding destination of the packet from a plurality of the virtual machines.

According to another preferred mode of the present invention, with reference to Fig. 31, a communication control apparatus (600) in a communication system in which a virtual machine performs a communication function of a hardware appliance used in a communication network comprises first means (601) for selecting a forwarding destination of a packet (603) that is forwarded towards a plurality of paths (605₁ to 605ₙ where n is a predetermined positive integer not smaller than 2) in order to establish a communication session with the communication function, from a plurality of the virtual machines (VM: 606₁ to 606ₙ), and second means (602) for instructing a network switch (604) to forward the packet (603) to a selected virtual machine (VM).

According to yet another preferred mode of the present invention, a communication apparatus in a communication system in which a virtual machine performs a communication function of a hardware appliance used in a communication network comprises means for identifying a packet that is forwarded towards a plurality of paths in order to establish a communication session with the communication function, and means for aggregating the packet identified in an apparatus that forwards the packet to a virtual machine selected from a plurality of the virtual machines.

According to another preferred mode of the present invention, with reference to Fig. 32, there is provided narrowing down means (700) for selecting at least one forwarding destination (path m where 1 ≤ m ≤ n) for a packet that is forwarded towards a plurality of paths (paths 1 to n where n is a predetermined positive integer not smaller than 2) when receiving at least one of the packets and selectively forwarding the packet to the selected forwarding destination.

According to preferred modes of the present invention, an information processing apparatus (for instance 250 in Fig. 5) in which a virtual machine that performs a communication function of a hardware appliance used in a communication network is provided comprises means (240 in Fig. 5) for operating a virtual switch (for instance 220 in Fig. 5) that includes a function of a network switch, and the virtual switch (for instance 220 in Fig. 5) comprises means for forwarding a packet that is forwarded towards a plurality of paths in order to establish a communication session with the communication function, to a virtual machine selected from a plurality of the virtual machines. The forwarding means of the virtual switch (for instance 220 in Fig. 5) forwards the packet that is forwarded towards a plurality of paths in order to establish a communication session with the communication function, to a communication control unit (200 in Fig. 5), and forwards the packet to a virtual machine selected by the communication control unit (200 in Fig. 5).

According to preferred modes of the present invention, means (500 in Fig. 30) for narrowing down forwarding destinations may include a node (26 in Fig. 4) that aggregates packets broadcasted over the network and forwards the packet to the selected forwarding destination via unicast.

According to preferred modes of the present invention, a control apparatus comprises means (402 in Fig. 25) for receiving a notification from a switch that has received a packet that is forwarded towards a plurality of paths; and means (401 in Fig. 25) for selecting at least one port (PORT) that forwards the packet in a predetermined format or a switch (SW) that corresponds to the port from a plurality of the switches. The functions of these means may be realized by a program executed by a computer that constitutes the control apparatus.

According to preferred modes of the present invention, the switch (OVS in Fig. 5, OFS in Fig. 18) forwards a supplied packet according to a processing rule set by the control apparatus (OFC in Fig. 5, OFC in Fig. 18), and the control apparatus (OFC in Fig. 5, OFC in Fig. 18) sets the processing rule regarding packet forwarding for the switch.

According to preferred modes of the present invention, there may be provided a line multiplexer (DSLAM in Fig. 11) that groups a plurality of lines, and the line multiplexer may comprise the switch controlled by the control apparatus (27 in Fig. 11) and forward the packet to the selected forwarding destination. Or there may be provided a load balancer apparatus (LB in Fig. 13) that determines a forwarding destination of the packet.

According to preferred modes of the present invention, there may be provided a line multiplexer (DSLAM in Figs. 15 and 17) that groups a plurality of lines and a load balancer apparatus (LB in Figs. 15 and 17) that determines a forwarding destination of the packet, and the packet may be forwarded to a forwarding destination determined by the load balancer apparatus.

The control apparatus (OFC in Fig. 18) is connected to a plurality of the switches (OFS 1, OFS 2, and OFS 3 in Fig. 18), and when receiving a broadcast packet, the plurality of switches notify the control apparatus (OFC in Fig. 18) that the broadcast packet has been received. The control apparatus (OFC in Fig. 18) may first start a timer upon when receiving a notification from the switch that a broadcast packet has been received and select at least one port or switch upon occurrence of a timeout

Alternatively, each of a plurality of the switches (OVS 1, OVS 2, and OVS 3 in Fig. 5) is connected to at least one network function unit (VM 11 to VM 13, VM 21 to VM 23, and VM 31 to VM 33); and the control apparatus (OFC in Fig. 5) is connected to a plurality of the network function units (VM 11 to VM 13, VM 21 to VM 23, and VM 31 to VM 33) connected to a plurality of the switches (OVS 1, OVS 2, and OVS 3 in Fig. 5), receives a notification from the switch that a broadcast packet has been received, selects at least one of the network function units on the basis of the load on a plurality of the network function units (VM 11 to VM 13, VM 21 to VM 23, and VM 31 to VM 33), and instructs a switch including a port connected to the selected network function unit to forward the broadcast packet from the port.

According to preferred modes of the present invention, the network function units (VM 11 to VM 13, VM 21 to VM 23, and VM 31 to VM 33) are virtual machines virtualized on a virtualization infrastructure (VMM) of a server.

According to preferred modes of the present invention, switches (OFS 1 to OFS 3 in Fig. 18, and SW 1 to SW 3 in Fig. 24) that notify the control apparatus when receiving a packet (for instance broadcast packet) in a forwarding format in which the same packet is forward to a plurality of destinations are disposed on the boundary between a network constituted by the switches (31 in Fig. 18, and 41 in Fig. 24) and another network (32 in Fig. 18, and 42 in Fig. 24).

The configuration above allows the distribution of the load over the entire network. Next, exemplary embodiments will be described.

For instance, "OpenFlow" enabling flow control, etc., by having a controller that performs centralized management give software instructions to devices such as switches is known as a technology achieving SDN (Software Defined Network). In OpenFlow, communication is based on end-to-end flow entries (a flow is defined by a combination of, for instance, an input port, MAC (Media Access Control) address, IP (Internet Protocol) address, and port number) and path control, failure recovery, load balancing, and optimization are performed. An OpenFlow switch (abbreviated as "OFS") comprises a secure channel for communicating with an OpenFlow controller (abbreviated as OFC") corresponding to a control apparatus, and operates according to a flow table, an addition to or rewriting of which is suitably instructed by the OFC.

As illustrated in Fig. 28, in the flow table of the OFS, a set of matching rules (Match Field) (Header Field) to be matched against the header of a received packet, actions (Actions) defining the processing contents, and flow statistics (Counters) is defined for each flow. An exact value or wild card may be used for the matching rules. Actions are applied to a packet that matches the rule. The flow statistics are also referred to as "activity counter" and include, for instance, active entry count, packet lookup count, and packet match count, and for each flow, received packet count, received byte count, and active period of the flow, and for each port, received packets, transmitted packets, received bytes, transmitted bytes, reception drops, transmission drops, reception errors, transmission errors, received frame alignment errors, reception overrun errors, reception CRC (Cyclic Redundancy Check) errors, and collision count.

A predetermined field of a packet header is used to be matched against the rules in the flow table of the OFS. As illustrated in Fig. 29, information to be matched in the header includes MAC (Media Access Control) DA (Destination Address, 48 bits), MAC SA (Source Address, 48 bits), Ethernet (registered trademark) type (TPID), VLAN ID (Virtual LAN (Local Area Network) ID), VLAN TYPE (priority), IP source address (IP SA, 32 bits), IP destination address (IP DA, 32 bits), IP protocol, source port (TCP (Transmission Control Protocol/UDP (User Datagram Protocol) or ICMP (Internet Control Message Protocol) Type), and destination port (TCP/UDP destination port or ICMP Code), etc.

Upon reception of a packet, the OFS searches for an entry having matching rules that match the header information of the received packet in the flow table. When an entry matching the received packet is found as a result of the search, the OFS updates the flow statistics (Counters) and performs the processing contents (packet transmission from a designated port, flooding, discard, etc.) written in the action field of the entry on the received packet. On the other hand, when no entry matching the received packet is found as a result of the search, the OFS forwards the received packet to the OFC via the secure channel, requests the OFC to determine a packet path on the basis of the source and destination of the received packet, receives a flow entry that realizes this, and updates the flow table. As described, the OFS forwards a packet using an entry stored in the flow table as a processing rule. In some cases, the present description refers to the forwarding unit as "packet" without distinguishing between a frame that is a Layer 2 PDU (Protocol Data Unit), and a packet that is a Layer 3 forwarding unit.

### <Exemplary Embodiment 1>

Fig. 4 is a diagram illustrating the configuration of Exemplary Embodiment 1 of the present invention. Fig. 4 illustrates an example in which the technological concept of the present invention is applied to the prototype example in Fig. 3.

Referring to Fig. 4, each of switches (edge switches) 23₁ and 23₂ aggregates broadcast packets (the PADI packets described above) from a client 1 into a predetermined aggregation node 26. The aggregation node 26 determines at least one forwarding destination of a broadcast packet and transmits the packet to the determined forwarding destination via unicast. The aggregation node 26 selects a virtual machine that serves as the forwarding destination of a broadcast packet (PADI packet), in such a manner that the load on virtual machines (VM) 230₁ to 230₃ (for instance the load on VMs realizing the BRAS functions) is distributed, without being limited thereto. For instance, the forwarding destinations of broadcast packets (PADI packets) may be assigned to the virtual machine (VM) 230₁ to 230₃ in order in a round robin manner, or on the basis of the load states (for instance obtained and managed by polling) of the virtual machines (VM) 230₁ to 230₃, a virtual machine (VM) having a low load may be selected. Further, cases of broadcast packets (PADI packets) are used in the examples below, however, the packets are not limited thereto as long as they are packets forwarded towards a plurality of paths in order to establish a communication session with the communication function of a BRAS/BAS. For instance, multicast packets may be used instead of broadcast packets.

Fig. 5 is a diagram illustrating a virtualized configuration of BRAS functions as a specific configuration example of Fig. 4. At least BRAS functions are realized as a virtual machine (VM) 230 implemented on a virtual machine monitor (VMM) such as a hypervisor of a server 250. Further, Fig. 5 illustrates a configuration example in which OpenFlow described above is applied. The functions of the OFS are virtualized, for instance, on the server 250 as the virtual switch (OVS) 220 virtualized by a software program and implemented on the VMM. A L2 network 2A that includes a L2 (Layer 2) switch (L2SW) is a network (a part of the carrier network 2 in Fig. 1) that constitutes a carrier IP (Internet Protocol) network. A core network 22 is, for instance, an IMS (Internet Multimedia System) core network (or it may be an EPC (Evolved Packet Core)/LTE (Long Term Evolution) core network). Further, the server 250 includes a control unit 240. The control unit 240 is, for instance, a VMM of the aforementioned hypervisor. The control unit 240 has a function of operating the VM 230 and the OVS 220, a virtual switch. Further, when the control unit 240 is constituted by a hypervisor, the virtual machine VM 230 and the OVS 220 access hardware resources such as a network via the hypervisor (access is made by the device driver of the corresponding hardware device via the hypervisor), however, Fig. 5 illustrates that the OVS 220 is directly connected to the L2 network 2A without going through the hypervisor (the control unit 240) in order to simplify the diagram.

The OFC 200 corresponds to the aggregation node 26 in Fig. 4 and controls the OVS 220 and the VM 230. The virtual switch (OVS) 220 aggregates PADI packets on the OFC 200 using a Packet_In message of the OpenFlow protocol. The OFC 200 determines a virtual machine (VM) that is a forwarding destination of a PADI packet, and instructs the virtual switch (OVS) 220 to forward the PADI packet by transmitting a Packet_Out message thereto. As described, according to the present exemplary embodiment, PADI packets are aggregated on the OFC using the OpenFlow protocol.

In Exemplary Embodiment 1, PADI packets are aggregated on the OFC using the Packet_In message of the OpenFlow protocol. As a result, a client (host) is able to transmit a PADI packet in a format defined in the current PPPoE protocol, with no need to change the destination thereof.

As described, according to Exemplary Embodiment 1, PADI packets can be aggregated without changing the PPPoE protocol by utilizing the OpenFlow protocol. Therefore, since the OFC is able to determine the forwarding destinations of the aggregated PADI packets, it becomes possible for the OFC to distribute the load on the BRAS.

In Fig. 5, each of virtual machines VM 11 to VM 13 is connected to a port (not shown in the diagram) of an OVS 1 and receives a packet forwarded from a corresponding output port (not shown in the diagram) of the OVS 1. A packet outputted from each of the virtual machines VM 11 to VM 13 is supplied to a corresponding input port (not shown in the diagram) of the OVS 1. Each of virtual machines VM 21 to VM 23 is connected to a port (not shown in the diagram) of an OVS 2 and receives a packet forwarded from a corresponding output port (not shown in the diagram) of the OVS 2, and a packet outputted from each of the virtual machines VM 21 to VM 23 is supplied to a corresponding input port (not shown in the diagram) of the OVS 2. Similarly, each of virtual machines VM 31 to VM 33 is connected to a port (not shown in the diagram) of an OVS 3 and receives a packet forwarded from a corresponding output port (not shown in the diagram) of the OVS 3, and a packet outputted from each of the virtual machines VM 31 to VM 33 is supplied to a corresponding input port (not shown in the diagram) of the OVS 3. Further, the virtual machines VM 11 to VM 33 and the OVS 1 to OVS 3 are virtualized on the VMM (the control unit 240) such as a hypervisor on a single server in the example in Fig. 5, however, the configuration is not limited thereto. For instance, a configuration in which the virtual machines VM 11 to VM 13 and the OVS 1 are virtualized on a VMM such as a hypervisor on a single server, the virtual machines VM 21 to VM 23 and the OVS 2 are virtualized on a VMM on another server, and the virtual machines VM 31 to VM 33 and the OVS 3 are virtualized on a VMM on yet another server may be employed.

As illustrated in Fig. 5, each of the OVS 1 to the OVS 3 is connected to the OFC 200 via a control plane 222. The OVS 1 to the OVS 3 are connected to the L2 switch (L2SW) of the L2 network 2A constituting a carrier IP network via a data pane 221. The OFC 200 is connected to the virtual machines (VM 11 to VM 33) via a management plane 223. In SDN, networking functions are divided by a unit called "plane" abstracted by software, and the planes include the control plane to dynamically configure and manage the network topology, the forwarding plane to forward packets, the management plane to manage network appliances, and the service plane to manage network services. Further, Fig. 5 illustrates a configuration in which three virtual machines VM 230 are connected to each OVS 220, however, the number of VMs connected to each OVS 220 is not limited thereto. Moreover, each OVS 220 may have a different number of virtual machines VM connected thereto.

In the configuration shown in Fig. 5, upon reception of a PADI packet, the OVS is able to aggregate PADI packets on the OFC using the functions of a Packet_In message. As a result, the load on the BRAS can be distributed without not only the necessity of changing the PPPoE protocol as described above, but also changing the L2 network architecture and the L2 switches.

Fig. 6 is a diagram illustrating a configuration example of the OFC 200 in Fig. 5. In Fig. 6, the OFC 200 comprises a flow entry creation unit 201, a path calculation unit 202, a message transmission unit 203, a Packet_In identifying unit 204, a broadcast packet detection unit 205, a timer 206, a VM load information acquisition command transmission unit 207, a VM load information receiving unit 208, a VM selection unit 209, a node communication unit 211 that is an interface that communicates with the OVS, a VM communication unit 212 that is an interface that communicates with the VM, a topology information storage unit 213 that stories and manages the topology information of the network, and a user information storage unit 214 that stores user information (for instance information of the subscribers' terminals 11₁ to 11ₙ in Fig. 1). The functions of each of these units 201 to 212 may be implemented by a program executed by a computer that constitutes the OFC 200.

The Packet_In identifying unit 204 identifies a Packet_In message sent by the OVS (220 in Fig. 5) via a secure channel. Further, when the Packet_In identifying unit 204 detects a Packet_In message, the path calculation unit 202 is notified so as to calculate a packet forwarding path of the received packet.

The broadcast packet detection unit 205 determines whether or not the packet received by the OVS that has transmitted the Packet_In message, is a PADI packet from the message identified as a Packet_In message by the Packet_In identifying unit 204 (whether or not a PADI packet has been received).

Fig. 27 illustrates a packet format example for a PADI packet (refer to Non-Patent Literature 1 for details). In a PADI packet,
- MAC destination address in an Ethernet (registered trademark) frame is a broadcast address (48 bits are all "1"s = 0xffffffffffff: 0x represents a hexadecimal notation),
- source MAC address (SOURCE_ADDR) is the MAC address of the transmission source, and
- ETHER_TYPE is set to 0x8863 (Discovery Stage).
- VER field (V) is four bits and set to 0x1 for this version of the PPPoE specification,
- TYPE field (T) is four bits and set to 0x1 for this version of the PPPoE specification, and
- CODE field is eight bits and is defined for the Discovery and PPP Session stages.
- SESSION_ID field is sixteen bits and represented by an unsigned value,
- LENGTH field is sixteen bits, the length of the PPPoE payload,
- TAG_TYPE is a sixteen bit field and lists TAG_TYPEs and their TAG_VALUEs, and
- TAG_LENGTH is a sixteen bit field.

Referring to Fig. 6 again, when detecting that the Packet_In message notifies that a PADI packet has been received by the OVS, the broadcast packet detection unit 205 starts the counter of the timer 206 and wait for a PADI packet reception notification from another OVS until a timeout occurs.

The broadcast packet detection unit 205 is able to determine whether or not a notification indicates the reception of a first PADI packet by whether the timer 206 is counting or stopped (the operating state of the timer 205), without being limited thereto. When the timer 205 is in counting operation, an operation flag (for instance one bit)-not shown in the diagram - is turned on, while when the timer 205 is stopped, the operation flag is turned off.

Further, using a Packet_In message, other OVSs notify the OFC 200 of the reception of a PADI packet broadcast via the LS network 2A from the same transmission source (the client 1's router) as that of the OVS that first notified the reception of the PADI packet. Even when detecting the reception of the PADI packet, the broadcast packet detection unit 205 does not start the timer 206 when the timer 206 is counting.

When a time out of the timer 206 occurs, in response to this time out, the VM load information acquisition command transmission unit 207 transmits a VM load information acquisition command (message) for acquiring VM load information to the virtual machine (VM). The VM load information acquisition command is transmitted to the virtual machine (VM) 230 from the management plane 223 via the VM communication unit 212.

Further, in the present exemplary embodiment, the latest load on the virtual machine VM is acquired by transmitting a VM load information acquisition command (message) when the time out of the timer occurs, however, the present invention is not limited to such a configuration. For instance, the VM load information acquisition command transmission unit 207 may have the VM load information receiving unit 208 acquire the VM load information by transmitting a VM load information acquisition command by periodic polling in advance or by having the VM periodically upload load information to the OFC.

The VM load information receiving unit 208 receives the load information transmitted by the VM 230 via the VM communication unit 212 and supplies the VM load information to the VM selection unit 209.

The VM selection unit 209 selects a virtual machine (VM), for instance, currently having the smallest load on the basis of the VM load information from the VM communication unit 212. Though not limited thereto, the VM load information may include the number of processes (for instance authentication process) per unit time period or the accumulated number of processes in a predetermined time period by the VM constituting the BAS, or other statistics.

The VM selection unit 209 notifies the path calculation unit 202 of information on the selected virtual machine (VM). From the topology information storage unit 213, the path calculation unit 202 identifies an OVS to be connected to the selected virtual machine (VM),. and the message transmission unit 203 forwards a Packet_Out message to the OVS via the node communication unit 211, and instructs to the OVS to forward of the PADI packet received by the OVS (the physical port number of the forwarding destination). Upon reception of the Packet_Out message from the OFC 200, the OVS forwards the PADI packet to the selected VM by outputting the PADI packet from the designated port.

When in the OFS 200, the Packet_In identifying unit 204 identifies a Packet_In message transmitted by the OVS (220 in Fig. 6) and the broadcast packet detection unit 205 does not detect any PADI packet (the packet received by the OVS is not a PADI packet), the path calculation unit 202 of the OFC calculates a path, the flow entry creation unit 201 creates a flow entry, and the message transmission unit 203 transmits a Packet_Out message.

In the present exemplary embodiment, after first receiving a Packet_In message from an OVS notifying the reception of a PADI packet at the OVS, the broadcast packet detection unit 205 of the OFC 200 may wait for an arrival of a Packet_In message from another OVS notifying the reception of a PADI packet for a predetermined period of time (i.e., until the timer 206 times out). Then, once the timer 206 times out, the VM load information acquisition command transmission unit 207 transmits VM load information acquisition commands (Get VM load) via the VM communication unit 212 and the management plane 223 to a plurality of the virtual machines connected to the OVSs that have notified the reception of a PADI packet by sending a Packet_In message during a counting period of the timer 206. Or, VM load information acquisition commands may be transmitted to the virtual machines (VM) connected to the OVSs that do not transmit a PADI packet reception notification during the period between the start of the counting by the timer 206 and a timeout. The VM load information acquisition commands (Get VM load) may be forwarded via multicast over the management plane 223.

In the present exemplary embodiment, though not limited thereto, the time-out period of the timer 206 may be set to a value that takes the maximum delay of broadcast packet forwarding in the L2 network 2A into consideration. In the OFC 200, with management of the timer 206, it is made possible to avoid a deterioration of access performance and an increase in a response time due to waiting endlessly for a PADI packet reception notification from a second OVS after a PADI packet reception notification (Packet_In message) from a first OVS has been received. Further, the OFC 200 is able to accurately grasp the OVSs that have received a PADI packet out of a plurality of OVSs.

Fig. 7 schematically illustrates a state in which, in Fig. 5, a first PADI packet from the L2 network 2A arrives at the OVS 1, and the OVS 1 transmits a Packet_In message to the OFC 200, since the OVS 1 does not have the packet registered in a flow entry table thereof. Subsequently, PADI packets from the L2 network 2A will arrive at the OVS 2 and OVS 3 in this order, and the OVS 2 and the OVS 3 will transmit a Packet_In message to the OFS 200. When receiving the Packet_In messages from the OVSs 2 and 3 before the timer 206 in Fig. 6 times out, the OFC 200 transmits VM load information acquisition commands (Get VM Load) to the virtual machines (VM 11 to VM 13, VM 21 to VM 23, and VM 31 to VM 33) connected to the OVS 1, OVS 2, and OVS 3, respectively.

When receiving a Packet_In messages from the OVS 2 after the start of the counting by the timer 206 in Fig. 6 and before a timeout occurs, the OFC 200 may transmit a VM load information acquisition command (Get VM Load) only to the virtual machines (VM 11 to VM 13 and VM 21 to VM 23) connected to the OVS 1 and OVS 2, as described above. In this case, the VM selection unit 209 selects one virtual machine having the smallest load or one equivalent thereto from the virtual machines (VM 11 to VM 13 and VM 21 to VM 23) on the basis of VM load information received from the virtual machines (VM 11 to VM 13 and VM 21 to VM 23). Further, the VM selection unit 209 may select a VM on the basis of not only the load information, but also the hardware resource capacity (memory and storage) and the processing performance (allocated CPU) allocated to the virtual machines.

Fig. 8 is a diagram illustrating an operation sequence example of the present exemplary embodiment. Router, L2NW, OVS 1, OVS 2, VM 1, VM 2, and OFC correspond to the client's (the subscriber's home) router 10, the L2 network 2A, the OVS 1, the OVS 2, the virtual machines VM 11 to VM 13 (and one selected therefrom), the virtual machines VM 21 to VM 23, and the OFC in Fig. 7, respectively. Further, the OVS 3 in Fig. 7 is omitted in Fig. 8 simply for the sake of convenience for diagram creation. A number is given to each sequence in Fig. 8, and numbers in parentheses at the end of sentences in the description below indicate these sequence numbers.

Router, a PPPoE client, forwards a PADI packet to L2NW (1).

L2NW broadcast-forwards the PADI packet that arrives at OVS 1 first (2).

OVS 1 compares the header information of the received PADI packet with flow entry rules in a flow table held by OVS 1, and since nothing matches, OVS 1 transmits a Packet_In message to OFC (3).

After having arrived at OVS 1, the PADI packet arrives at OVS 2 as well (4). OVS 2 compares the header information of the received PADI packet with flow entry rules in a flow table therein, and since nothing matches, OVS 2 transmits a Packet_In message to OFC (5).

Having received the Packet_In message from OVS 1, OFC detects the reception of a broadcast packet (PADI) (6). OFC starts the timer (206 in Fig. 6) and waits until a timeout occurs (7). While waiting, OFC receives the Packet_In message transmitted by OVS 2 in the sequence number 5.

When a timeout occurs in the timer (206 in Fig. 6) (after a predetermined period of time has elapsed), OFC acquires VM load information (8). In other words, OFC transmits a VM load information acquisition command (Get VM Load) to each of the virtual machines VM 1 (VM 11 to VM 13) and VM 2 (VM 21 to VM 23) (9 and 10). In this case, the virtual machines to be the transmission destinations of the VM load information acquisition commands (Get VM Load) may be limited to the virtual machines VM 1 (VM 11 to VM 13) and VM 2 (VM 21 to VM 23) connected to OVS 1 that sent the PADI packet reception notification that triggered the broadcast packet detection unit (205 in Fig. 6) to start the timer (206 in Fig. 6) and OVS 2 that sent the PADI packet reception notification before the timeout occurred in the timer (206 in Fig. 6). In other words, the selection may be narrowed down by removing the virtual machines connected to the OVSs that did not send a PADI packet reception notification before the timeout in the timer (206 in Fig. 6) from the candidates.

Each of the virtual machines VM 1 (VM 11 to VM 13) and VM 2 (VM 21 to VM 23) transmits the load information (VM load information) thereof to OFC (11 and 12).

OFC selects a VM having a small load on the basis of the VM load information from the virtual machines VM 1 (VM 11 to VM 13) and VM 2 (VM 21 to VM 23) (13). In this case, at least one VM is selected from the virtual machines VM 11 to VM 13.

OFC instructs OVS 1 having an output port connected to the selected virtual machine VM 1 (at least one of the VM 11 to the VM 13) to forward the PADI packet received by the OVS (14). In other words, OFC transmits a Packet_Out message to OVS 1 (15). OVS 1 receives the Packet_Out message and forwards the PADI packet held therein to the VM selected from the virtual machines VM 11 to VM 13 by the VM selection unit (209 in Fig. 6) of the OFC (16). In this case, OFC may include the information of the VM (the port (output port) number of OVS connected to the selected VM) selected by OFC in the Packet_Out message, and OVS may forward the PADI packet to the VM from the output port (the selected port) connected to VM selected from VM 11 to VM 13. For instance, when VM 12 is selected by the OFC as the forwarding destination, OFC instructs OVS 1 to output the packet from a port corresponding to VM 12 using a Packet_Out message.

Further, OFC may forward the PADI packet directly to the selected VM without using a Packet_Out message.

Further, OFC may set an entry that defines a process of rewriting the destination MAC address of the PADI packet to the destination MAC address of the selected VM for OVS. For instance, when VM 12 is selected by OFC as the forwarding destination, an entry that defines a process of rewriting the destination MAC address (the broadcast address) of the PADI packet to the destination MAC address of VM 12 is set in OVS 1. It becomes possible to forward all PADI packets transmitted by the transmission source client of the PADI packet to VM 12 by setting an entry for OVS 1 as described. As a result, a BRAS that will accommodate a PPPoE session for the transmission source client of the PADI packet can be determined. Further, even when a PADI packet is transmitted to establish a session again after the session with the transmission source client of the PADI packet has ended, the communication load on OFC 200 can be suppressed since the PADI packet can be transmitted to the selected VM without transmitting a Packet_In message to the OFC 200. Further, in a case where the startup of a VM corresponding to a BRAS is finished and it is not functioning anymore, the OFC 200 deletes the entry set in the corresponding OVS.

Further, Fig. 8 does not show this, but a sequence after the PADI packet has been transmitted to the VM is the same as the sequence shown in Fig. 2 that are described above (except that the OVS that has received a new packet transmits a Packet_In message to the OFC, receives a Packet_Out message from the OFC, and forwards the packet from a designated port).

In other words, the virtual machine VM that has received the PADI packet forwards a PADO packet (refer to Fig. 2) that is a unicast packet and a response from this virtual machine VM to the router, to the OVS connected to the virtual machine VM via the data plane. Upon reception of the PADO packet, the OVS transmits a Packet_In message to the OFC since a flow entry cannot be found. The OFC calculates a packet forwarding path (a packet forwarding path in the OpenFlow network) of the PADO packet, and transmits a Packet_Out message to the OVS, instructing the OVS to forward the packet from a designated physical port. The OVS forwards the PADO packet forwarded from the virtual machine VM to the L2 network, and the L2 network 2A forwards the packet to the router 10 (refer to Fig. 5). A PADR packet that is a unicast packet from the router 10 (refer to Fig. 5), is forwarded from the L2 network 2A to the OVS. Upon reception of the PADR packet, the OVS transmits a Packet_In message to the OFC. The OFC transmits a Packet_Out message to the OVS, and the OVS transmits the PADR packet to the virtual machine VM, the transmission source of the PADO packet. Upon reception of the PADR packet, the virtual machine VM issues a session ID and transmits a PADS packet including the session ID to the OVS connected to the VM. Upon reception of the PADS packet, the OVS transmits a Packet_In message to the OFC since no flow entry is found. The OFC calculates a packet forwarding path of the PADS packet and transmits a Packet_Out message to the OVS, instructing the OVS to forward the packet from a designated physical port. The OVS forwards the PADS packet to the L2 network 2A (refer to Fig. 5) and the packet is forwarded to the router 10.

### <Modification>

Fig. 9 is a diagram illustrating the configuration of a modification example of OFC in Fig. 6. OFC 200' shown in Fig. 9 differs from OFC 200 in that the timer 206 in Fig. 6 is eliminated. Otherwise, OFC 200' shown in Fig. 9 is configured identically to OFC 200 shown in Fig. 6. The following describes the differences between Figs. 6 and 9. In this modification, when OFC 200' receives a Packet_In message from OVS notifying the reception of a new PADI packet and the broadcast packet detection unit 205 detects the reception of the PADI packet, the VM load information acquisition command transmission unit 207 transmits a VM load information acquisition command Get VM Load to VMs (virtual machines) from the management plane 223.

Fig. 10 is a diagram illustrating the sequence operation of the modification in Fig. 9. The following describes difference from Fig. 8.

In Fig. 10, when OFC receives a Packet_In message from OVS 1 notifying the reception of a new PADI packet (6), the OFC immediately acquires VM load information without waiting to receive a Packet_In message from the other OVSs notifying the reception of a PADI packet (7). The OFC transmits a VM load information acquisition command (Get VM Load) to VM 1 (VM 11 to VM 13) and VM 2 (VM 21 to VM 23) (8 and 9).

In other words, after the arrival of the PADI packet at OVS 1, a PADI packet arrives at OVS 2 as well (4). OVS 2 compares the header information of the received PADI packet with flow entry rules in a flow table, and since nothing matches, OVS 2 notifies OFC of the reception of the new packet, using a Packet_In message (5). OFC, however, does not perform any processing regarding the reception of the PADI packet notified with the Packet_In message from OVS 2.

Each of VM 1 (VM 11 to VM 13) and VM 2 (VM 21 to VM 23) transmits the load information (VM load information) thereof to OFC (10 and 11).

OFC selects a VM having a small load on the basis of the VM load information (12). In this case, OFC selects at least one VM from the VM 21 to VM 23. OFC instructs OVS 2 having an output port connected to the selected VM to forward the PADI packet (13). In other words, OFC transmits a Packet_Out message to OVS 2 (14). Upon reception of the Packet_Out message, OVS 2 forwards the received PADI packet held therein to the selected VM by outputting the packet from the output port connected to the VM selected by the VM selection unit 209 of the OFC from VM 21 to VM 23 (15).

Further, as an example of virtualized network functions, application examples of the virtual switch OVS and the virtual machine VM were described in the exemplary embodiment above. However, the switch is not limited to the virtual switch OVS, and the present invention can be applied to an OFS, a real apparatus (normal apparatus), as described later.

The exemplary embodiment and the modification thereof can be applied not only to the virtual machine (VM) that virtualizes a BRAS function (or BAS function), but also to a configuration in which the BRAS function is configured by a plurality of processing units decentralized into a plurality of processor elements and the OFS transmits a PADI packet via a port connected to each processing unit.

### <Exemplary Embodiment 2>

Fig. 11 is a diagram illustrating Exemplary Embodiment 2. In Exemplary Embodiment 2, the OpenFlow functions (OFS) are implemented in a DSLAM 21' that multiplexes a plurality of ADSL lines. In Fig. 11, an OFC 27 forwards a PADI packet to a BRAS by setting a VLAN tag and a port VLAN corresponding to a virtual machine (VM) that operates the BRAS of the forwarding destination of the PADI packet in the header thereof for an OFS (not shown in the diagram) in the DSLAM 21'. When a PADI packet is sent to a BRAS 1 that operates in a virtual machine (VM1) 230₁, the DSLAM 21' adds a VLAN tag of "1" to the packet header.

In OpenFlow, SET_VLAN_VID (processing that adds/updates a VLAN tag with a specified VLAN ID) is defined as an action to change the VLAN ID field (refer to Fig. 29) of a packet header (frame header).

In the present exemplary embodiment, the OFC may set SET_VLAN_VID in a flow table of the OFS within the DSLAM 21' as an action that matches the rules of a PADI packet in advance, and the OFS may set a VLAN ID for a PADI packet and forward the packet. Further, each of the virtual machines (VM 1) 230₁, 230₂, and 230₃ does not have to be a single unit, and a plurality of virtual machines may be connected in parallel as illustrated in Fig. 5.

Fig. 12A is a diagram illustrating a configuration example of the DSLAM 21' shown in Fig. 11. In the DSLAM 21', an ATM (Asynchronous Transfer Mode) switch 21-1 switches among ATM cells from a plurality of ADSL lines 15₁ to 15ₙ (n is an integer not smaller than 2). An ATM-Ether conversion unit 21-2 performs protocol conversion between ATM cells and Ethernet (registered trademark) frames. As an OpenFlow function, upon reception of a packet converted into an Ether frame by the ATM-Ether conversion unit 21-2, an OFS 21-4 transmits a Packet_In message to the OFC 27 when no flow entry corresponding to the packet is registered as a flow entry. The OFC 27 determines a packet forwarding destination and transmits a Packet_Out message to the OFS 21-4, instructing the OFS 21-4 to forward the PADI packet from a designated port. Note that a plurality of OFSs may be provided. Further, the DSLAM 21' may be implemented on a virtual machine. Moreover, the OFC 21-4 may be implemented by a virtual switch (OVS).

Fig. 12B is a diagram illustrating the configuration of the DSLAM 21 of the related technology in Fig. 1. The DSLAM 21 comprises the ATM switch 21-1, the ATM-Ether conversion unit 21-2, and an interface unit 21-3. The interface unit 21-3 is a transmission/reception interface connected to, for instance, a 10BASE-T or 100BASE-TX Ethernet (registered trademark).

According to the present exemplary embodiment, a contribution to the balancing of the load on a BRAS/BAS is made by dividing a carrier network into several VLANs (for instance three VLANs in Fig. 11) and having the DSLAM 21' forward a broadcast packet (PADI) while setting the forwarding destination VLAN of the broadcast packet in the VLAN ID field of the header (frame header) of the broadcast packet.

### <Exemplary Embodiment 3>

Fig. 13 is a diagram illustrating Exemplary Embodiment 3. In Exemplary Embodiment 3, there is provided a load balancer (LB) 28 that balances the loads on a network and virtual machines. As in Exemplary Embodiment 2, a DSLAM 21" comprises the OpenFlow functions in Exemplary Embodiment 3. An OFS (not shown in the diagram) in the DSLAM 21" may be implemented as a virtual switch OVS.

Further, in the present exemplary embodiment, the load balancer (LB) 28 determines a virtual machine (VM) to be a forwarding destination of a PADI packet in a round robin manner in which each of a plurality of virtual machines is assigned in turn or a dynamic assignment method in which the decision is made on the basis of the results of monitoring the load on the virtual machines. The load balancer (LB) 28 may be implemented on a virtual machine on a server.

In Fig. 13, when the DSLAM 21" receives a PADI packet from a client 1, the OFS (not shown in the diagram) of the DSLAM 21" transmits a Packet_In message to the OFC 27, and the OFC 27 instructs the OFS (not shown in the diagram) of the DSLAM 21" to forward the PADI packet to the load balancer (LB) 28. In this case, a flow entry defining the rules of a process (Action) that forwards a packet from a port connected to the load balancer (LB) may be added when the PADI packet is entered into a flow table of the OFS. The load balancer (LB) 28 forwards the PADI packet forwarded from the OFS to a selected virtual machine.

Fig. 14 is a diagram illustrating a configuration example of the DSLAM 21" in Fig. 13. In Fig. 14, the OFS 21-4 of the DSLAM 21" comprises a port connected to the load balancer (LB) 28, compared with the DSLAM 21' in Fig. 12A. In Fig. 14, when the DSLAM 21" receives a PADI packet from the ADSL line 15, the OFS 21-4 of the DSLAM 21" transmits a Packet_In message to the OFC 27. The OFC 27 instructs the OFS 21-4 to forward the PADI packet to the load balancer (LB) 28.
The load balancer (LB) 28 forwards the PADI packet forwarded from the OFS 21-4 to a selected virtual machine 230. Further, the OFC 27 forwards a Packet_Out message to the OFS 21-4, instructing the OFS 21-4 to forward the received packet directly to the destination virtual machine (VM) without forwarding the packet to the load balancer (LB) 28, when the Packet_In message transmitted by the OFS 21-4 does not notify that the OFS 21-4 has received a PADI packet (i.e., it notifies the reception of a packet that is not a PADI packet).

Further, in the present exemplary embodiment, the load balancer (LB) 28 may acquire flow entry statistical information for each flow from the OFS 21-4 and select the virtual machine (VM) of a flow having the smallest load as the forwarding destination of the PADI packet on the basis of the flow loads.

According to the present exemplary embodiment, a PADI packet received by the OpenFlow switch is forwarded to the dedicated load balancer (LB), and the load balancer (LB) determines a forwarding destination of the PADI packet taking load balancing into consideration. By providing a separate load balancer (LB), the effects of the load balancing can be enhanced. Further, the concentration of the load on the OFC can be avoided.

### <Exemplary Embodiment 4>

Fig. 15 is a diagram illustrating Exemplary Embodiment 4. In Fig. 15, a DSLAM 21'" comprises a load balancing function (LB) 28'. When receiving a broadcast packet (for instance a PADI packet), the DSLAM 21'" selects a virtual machine (VM) to be a forwarding destination of the PADI packet on the basis of the control by the load balancing function (LB) 28' and forwards the PADI packet to the selected virtual machine (VM). For instance, when receiving a packet that is not a PADI packet from the ADSL lines (15₁ to 15ₙ), the DSLAM 21'" may forward the packet to the virtual machine (VM) of the destination specified by the packet header without receiving the control of the load balancing function (LB) 28'.

Fig. 16 is a diagram illustrating the configuration of the DSLAM 21'" of Exemplary Embodiment 4. Referring to Fig. 16, a load balancer (LB) 28' is provided to an equivalent of the DSLAM 21 of Fig. 12B. The load balancer (LB) 28' controls the interface circuit (IF) 21-3 so that a PADI packet is transmitted to a selected virtual machine.

According to the present exemplary embodiment, a forwarding destination of a broadcast packet can be determined while taking load balancing into consideration. The configuration can be simplified without including an OpenFlow network.

### <Exemplary Embodiment 5>

Fig. 17 is a diagram illustrating Exemplary Embodiment 5. In Exemplary Embodiment 5, the load balancer (LB) 28 is provided after the DSLAM 21. A PADI packet outputted by the DSLAM 21 is forwarded to a virtual machine (VM) selected by the load balancer (LB) 28. The load balancer (LB) 28 determines virtual machines (VM) 230₁ to 230₃ to be forwarding destinations of PADI packets in a round robin manner in which each of a plurality of virtual machines (VM) 230₁ to 230₃ is assigned in turn or a dynamic assignment method in which the decision is made on the basis of the results of monitoring the load on the virtual machines 230₁ to 230₃. The load balancer (LB) 28 may be implemented on a virtual machine on a server.

According to the present exemplary embodiment, a forwarding destination of a broadcast packet can be determined while taking load balancing into consideration. When the load balancer is not virtualized but constituted by a dedicated apparatus and, high-speed processing can be achieved.

### <Exemplary Embodiment 6>

Fig. 18 is a diagram illustrating the configuration of Exemplary Embodiment 6. In Fig. 18, OFS 1, OFS 2, and OFS 3 are disposed on the boundary between an L2 network 31 and an OpenFlow network 32. Hosts 1, 2, and 3 such as servers are connected to OFSs 7 and 8, end nodes of the OpenFlow network 32. OFS 1 to OFS 8 of the OpenFlow network 32 are unitarily managed by OFC300.

Fig. 19 is a diagram schematically illustrating a state in which a broadcast packet BP from the L2 network 31 is forwarded to the OpenFlow network 32. OFS 1 receives a broadcast packet BP, transmits a Packet_In message to OFC 300 since no corresponding flow entry is found, and requests OFC 300 to set a flow (calculate a path) for the broadcast packet BP. OFS 2 and the OFS 3 each receive a broadcast packet BP, transmit a Packet_In message to OFC 300 since no corresponding flow entry is found, and requests OFC 300 to calculate a path. OFC 300 selects an OFS (for instance, OFS 1) on the basis of the load information of the OFSs, calculates a flow that forwards the broadcast packet BP, sets a flow entry for OFSs on the path (transmitting a FlowModify message to OFS 4 and OFS 7), and transmits a Packet_Out message to a selected OFS 1. The Packet_Out message is not transmitted to unselected OFSs 2 and 3. Upon reception of the Packet_Out message, OFS 1 forwards the broadcast packet BP to OFS 4 from a designated output port. Further, the broadcast packet BP is forwarded to HOSTs 1, 2, and 3 from OFS 4 via OFS 7 and OFS 8.

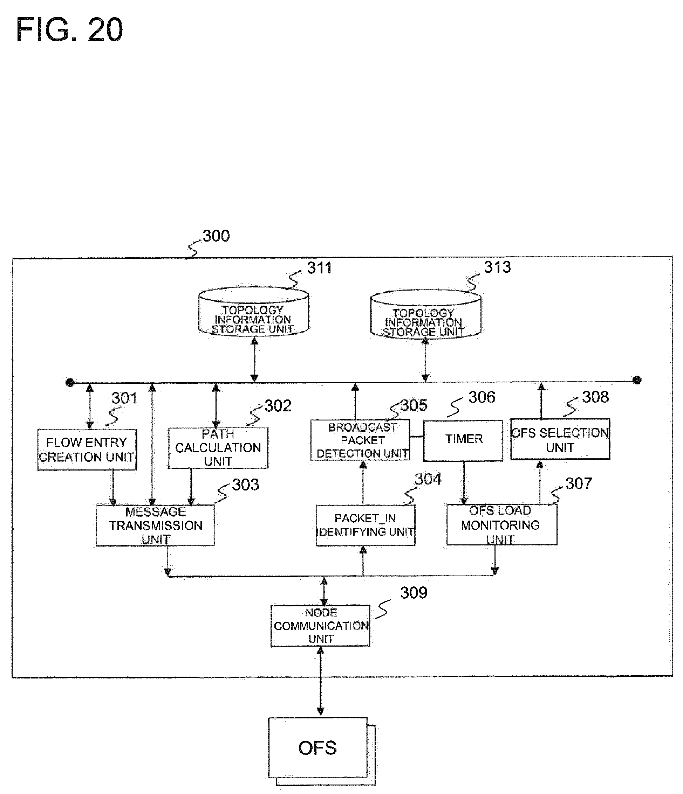

Fig. 20 is a diagram illustrating the configuration of the OFC 300 of Exemplary Embodiment 6. Referring to Fig. 20, the OFC 300 comprises a flow entry creation unit 301, a path calculation unit 302, a message transmission unit 303, a Packet_In identifying unit 304, a broadcast packet detection unit 305, a timer 306, an OFS load monitoring unit 307, an OFS selection unit 308, a node communication unit 309 that is an interface communicating with the OFSs, a topology information storage unit 311 for storing and managing the topology information of the networks, and a user information storage unit 313 that stores user information.

When a timeout occurs in the timer 306 after the broadcast packet detection unit 305 first detects a broadcast packet reception notification and the timer 306 is started, the load on OFSs may be monitored by having the OFS load monitoring unit 307 transmit an OFS load information acquisition command to OFSs 1, 2, and 3 and acquire flow entry statistical information (the number of bytes received, etc.) from the OFSs.

Or, the OFS load monitoring unit 307 may derive the load of each flow by transmitting an OFS load information acquisition command to OFSs 1 to 8 constituting the OpenFlow network 32. Or, the OFS load monitoring unit 307 may acquire load information such as the communication amount by having an OFS include flow entry statistical information (the number of packets received, the number of bytes received, etc.) in a Packet_Out message from the OFS.

Alternatively, the OFS load monitoring unit 307 may periodically acquire and store the load information of the OFSs by polling and immediately supply the load information of the OFSs to the OFS selection unit 308, when a timeout occurs in the timer 306.

The OFS selection unit 308 selects an OFS having the smallest load from the OFSs that have transmitted a Packet_In message, and the message transmission unit 303 transmits a Packet_Out message to the OFS selected by the OFS selection unit 308. Further, the path calculation unit 302 calculates paths from the selected OFS to the HOSTs 1, 2, and 3 to which the broadcast packet is forwarded, and the flow entry creation unit 301 creates a flow entry for the OFSs on the broadcast packet forwarding paths and transmits a flow entry setting command (Flow-Modify) to the OFSs on the broadcast packet forwarding paths via the message transmission unit 303. Further, the OFSs on the broadcast packet forwarding paths receive the flow entry setting command (Flow-Modify) to add the flow entry to the flow table thereof.

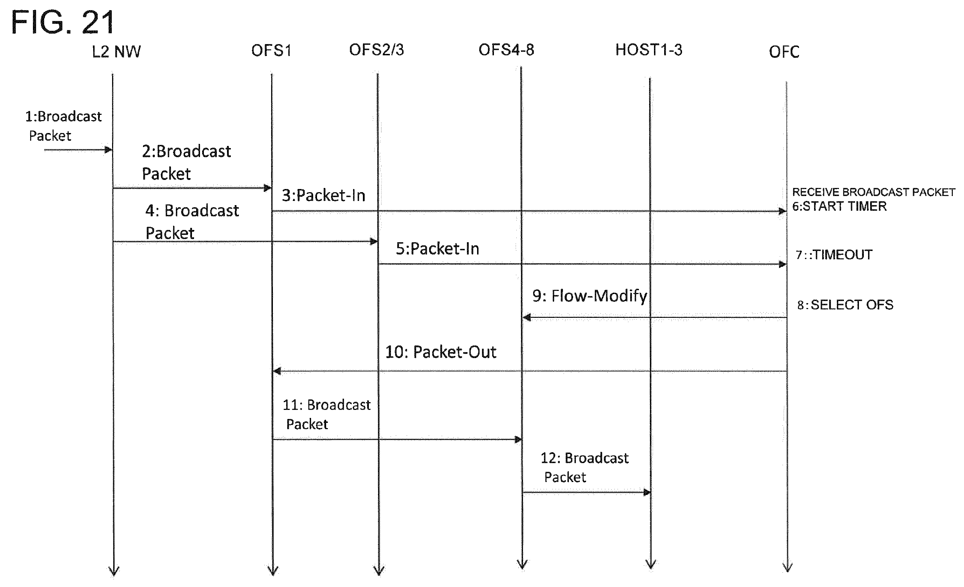

Fig. 21 is a diagram illustrating a sequence operation of Exemplary Embodiment 6. L2NW, OFS 1, OFS 2/3, OFS 4-8, HOST 1-3, and OFC correspond to the L2 network 31, the OFS 1, the OFSs 2 and 3, the OFSs 4 to 8, the hosts 1 to 3, and the OFC 300 in Fig. 19, respectively. A number is given to each sequence in Fig. 21, and numbers in parentheses at the end of sentences in the description below indicate these sequence numbers. Further, Fig. 21 does not show a sequence of transmitting an OFS load information acquisition command, taking into account a case where the OFS load monitoring unit 307 has already acquired the load information of the OFSs when the timer 306 times out.

A broadcast packet arrives at the L2 network (1).

The broadcast packet from the L2 network arrives at the OFS 1 (2).

The OFS 1 transmits a Packet_In message to the OFC (3).

The broadcast packet from the L2 network arrives at the OFS 2 (4).

The OFS 2 transmits a Packet_In message to the OFC (5).

When detecting that the OFS 1 has received the broadcast packet by receiving the Packet_In message from the OFS 1, the OFC starts the timer (306 in Fig. 20) (6).

When a timeout occurs in the timer (306 in Fig. 20) (7), the OFC selects the OFS 1 on the basis of the results of monitoring the load on the OFSs (8), transmits a Packet_Out message to the OFS 1, and instructs the OFS 1 to forward the broadcast packet from a designated port (10). Further, the OFC transmits a Flow-Modify message to the OFSs 4, 7, and 8 on the forwarding path of the broadcast packet, and each of the OFSs 4, 7, and 8 sets a flow entry for the broadcast packet in each flow table on the basis of the Flow-Modify message (9). For instance, the flow table of the OFS 7 has a flow entry that defines processing (Actions) of outputting an applicable PADI packet from three output ports connected to the hosts 1 and 2, and the OFS 8, respectively, when the PADI packet is received set therein.

The OFS 1 forwards the broadcast packet to the OFS 4 from the designated port (11), and the broadcast packet is forwarded to the hosts 1, 2, and 3 via the OFSs 7 and 8 (12).

In the sequences 11 and 12, when receiving the broadcast packet from an OFS in a previous stage, the OFSs 4, 7, and 8 forward the broadcast packet from a designated port according to the processing column (Actions) of the flow entry (refer to Fig. 28) without transmitting a Packet_In message to the OFC since the packet header matches the matching column (Match Field) of the flow entry set by the OFC. Further, a Packet_Out message is not transmitted to the OFS 2 and the OFS 3 that are not the OFS 1, out of the OFSs 1 to 3 on the boundary, and the broadcast packet is not forwarded from the OFS 2 and the OFS 3.

In Exemplary Embodiment 6 described above, the OFS 1 selected by the OFS selection unit 308 of the OFC 300 from the OFSs that have notified the reception of a broadcast packet with a Packet_In message may forward the packet to all ports in a forwarding state except for the port that received the broadcast packet. Further, the OFSs 4, 7, and 7 in later stages may forward the packet to all ports in a forwarding state except for the port that received the broadcast packet from an OFS in a previous stage.

According to Exemplary Embodiment 6, by selecting at least one of the OFSs 1, 2, and 3 on the boundary between the L2 network 31 and the OpenFlow network 32, the traffic of broadcast packets forwarded in the OpenFlow network can be greatly reduced, compared with a case where each of the OFSs 1, 2, and 3 forwards a broadcast packet.

### <Modification>

Fig. 22 is a diagram illustrating the configuration of an OFC of a modification example of Exemplary Embodiment 6. In Fig. 22, the timer 306 in Fig. 20 is eliminated in the OFC of this modification example. The configuration is the same as Fig. 20 otherwise. In Exemplary Embodiment 6, upon initially receiving a broadcast packet reception notification from an OFS, the OFC 300 starts the timer 306, notifies the OFS load monitoring unit 307 when a timeout occurs, and has the OFS selection unit 308 select an OFS.

On the other hand, in this modification example, upon initially receiving a broadcast packet reception notification from an OFS on the boundary, the OFC notifies the OFS load monitoring unit 307 without waiting for a broadcast packet reception notification from the other OFSs on the boundary, and has the OFS selection unit 308 select an OFS. In this case, when a broadcast packet reception notification is received from any one of the OFSs 1 to 3 on the boundary between the L2 network 31 and the OpenFlow network 32, an OFS having the smallest load may be selected. Or when an OFS on the boundary initially notifies the reception of a broadcast packet, this OFS may be selected. In this case, the OFS load monitoring unit 307 is unnecessary.

Fig. 23 is a diagram illustrating the operation of the modification example described with reference to Fig. 22. The difference from Fig. 21 will be described below.

Upon reception of a Packet_In message from the OFS 1, the OFC selects the OFS 1 (6) on the basis of the results of monitoring the load on the OFSs without waiting for a Packet_In message (5) from the OFS 2 and transmits a Packet_Out message to the OFS 1 (8). Further, the OFS [OFC?] transmits a Flow-Modify message to the OFSs 4 and 7, setting a forwarding path of the broadcast packet (7). The OFS 1 forwards the broadcast packet to the OFS 4 (9), and the packet is forwarded to the hosts 1, 2, and 3 via the OFSs 7 and 8 (10). Further, a Packet_Out message is not transmitted to the OFS 2 and the OFS 3 that are not the OFS 1, out of the OFSs 1 to 3 on the boundary.

According to this modification example, as in Exemplary Embodiment 6, by selecting at least one of the OFSs 1, 2, and 3 on the boundary between the L2 network 31 and the OpenFlow network 32, the traffic of broadcast packets forwarded in the OpenFlow network can be greatly reduced, compared with a case where each of the OFSs 1, 2, and 3 forwards a broadcast packet. Further, the management by the timer of Exemplary Embodiment 2 is unnecessary.

### <Exemplary Embodiment 7>

Fig. 24 is a diagram illustrating Exemplary Embodiment 7 of the present invention. In Fig. 24, there are switches SW1, SW2, and SW3 on the boundary between a first network 41 and a second network 42. The second network 42 of Exemplary Embodiment 7 replaces the OFSs 1 to 8 in the OpenFlow network of Exemplary Embodiment 2 with switches SW1 to SW8 such as L2 switches. Upon reception of a broadcast packet from an input port, the switches SW1 to SW8 duplicate the broadcast packet (BP) and output the packet from a plurality of ports (for instance flooding the packet to all the output ports).

In Exemplary Embodiment 7, when any one of the switches SW1, SW2, and SW3 notifies the reception of a broadcast packet, a controller 400 selects, for instance, one of the switches SW1, SW2, and SW3 and leaves the remaining switches unselected. For instance, the selected switch floods the received broadcast packet. The unselected switches do not forward the received broadcast packet. As a result, the overflow of broadcast packets within the network 42 can be suppressed. In the example of Fig. 24, the controller (CTRL) 400 that has received a broadcast packet reception notification from SW1 selects SW1. The controller 400 also receives broadcast packet reception notifications from the switches SW2 and SW3, but leaves the switches SW2 and SW3 unselected, and the broadcast packet is not forwarded by the switches SW2 and SW3.

Or for instance, the controller (CTRL) 400 that has received a broadcast packet reception notification from SW1 may select a particular output port (at least one output port) of the switch SW1.

Both the first network 41 and the second network 42 may be constituted by an L2 network. In this case, the switches SW1 to SW8 are constituted by, for instance, L2 switches, as the switches SW in the first network 41.

Fig. 25 is a diagram illustrating the configuration of the controller 400 of Exemplary Embodiment 7. The controller 400 comprises a port/switch (PORT/SW) selection unit 401, a packet reception detection unit 402, and a switch information storage unit 403. For instance, the packet reception detection unit 402 detects the reception of a broadcast packet by receiving a notification from a switch SW when the switch SW receives a broadcast packet.

In response to detection by the packet reception detection unit 402 that a switch SW has received a broadcast packet, the port/switch selection unit 401 refers to the switch information storage unit 403, selects at least one switch from the switches SW1 to SW3 according to a forwarding destination of the broadcast packet, and leaves the remaining switches unselected. Or the port/switch selection unit 401 refers to the switch information storage unit 403 and selects a port of at least one switch from the switches SW 1 to SW3. At least one switch that has been selected forwards the broadcast packet from, for instance, all ports, and the remaining switches do not forward the broadcast packet. Or at least one switch having at least one of the output ports thereof selected forwards the broadcast packet from at least one output port that has been selected.

Fig. 26 is a diagram illustrating the operation of Exemplary Embodiment 7. In Fig. 26, NW, SW1, SW2/3, SW4-8, HOST1-3, and CTRL correspond to the network 41, the switch SW1, the switches SW2 and SW3, the switches SW4 to SW8, hosts 1 to 3, and the controller CTRL 400 in Fig. 24, respectively. A number is given to each sequence in Fig. 26, and numbers in parentheses at the end of sentences in the description below indicate these sequence numbers.

A broadcast packet arrives at the network (NW) (1).

The broadcast packet from NW arrives at the switch SW1 (2).

SW1 notifies the controller (CTRL) of the reception of the broadcast packet (3). The broadcast packet from the L2 network arrives at the switch SW2 (4). The switch SW2 notifies the controller (CTRL) of the reception of the broadcast packet (5).

Upon reception of the broadcast packet reception notification from, for instance, the switch SW1, the controller (CTRL) selects the switch SW1 (or a port) (6). The controller (CTRL) transmits an instruction to forward the broadcast packet to the switch SW1 (7). The SW1 forwards the broadcast packet to the switch SW4 (8), and the packet is forwarded to the hosts 1, 2, and 3 via the switches SW7 and SW8 (9). By selecting at least one of the switches SW1, SW2, and SW3 (or at least one output port of a plurality of output ports of a switch SW) on the boundary between the first network 41 and the second network 42, the traffic of broadcast packets forwarded in the network can be greatly reduced, compared with a case where each of the switches SW1, SW2, and SW3 forwards a broadcast packet from all the output ports thereof, and it becomes possible to avoid the overflow of broadcast packets in the network (broadcast domain).

Further, in Exemplary Embodiment 7, the port/switch selection unit 401 may select a switch having a small load on the basis of the load on the switches SW1 to SW3 as in Exemplary Embodiment 6. Further, upon reception of a broadcast packet reception notification from the switch SW1, the controller 400 in Fig. 25 may start a timer not shown in the diagram and select a switch when the timer times out as in Exemplary Embodiment 1.

Further, in addition to a broadcast packet, at least one of the switches SW1 to SW3 may be selected for, for instance, a multicast packet (the packet is duplicated by a switch or router of the network and forwarded to a plurality of receivers) using an IP multicast group address on the basis of forwarding path information of the packet or switch connection information.

Each exemplary embodiment of the present invention has been described above, but the present invention is not limited to the exemplary embodiments above and further modifications, substitutions, and adjustments can be performed.

Further, the disclosure of each Non-Patent Literature cited above is incorporated herein in its entirety by reference thereto. It should be noted that other objects, features and aspects of the present invention will become apparent in the entire disclosure and that modifications may be done without departing the gist and scope of the present invention as disclosed herein and claimed as appended herewith. Also it should be noted that any combination of the disclosed and/or claimed elements, matters and/or items may fall under the modifications aforementioned.

### REFERENCE SIGNS LIST

1: subscriber's home (subscriber)
2: carrier network
3: Internet
10: router
11₁ to 11₃: terminal
12: ADSL modem
15, 15₁ to 15ₙ: ADSL line
20: BAS/BRAS
21, 21₁ to 21₃, 21', 21", 21'": DSLAM
21-1: ATM-SW
21-2: ATM-Ether conversion unit
21-3: IF
21-4: OFS
22: core network
2A: L2 network
21, 23₁, 23₃: edge switch
24: aggregation switch
25: edge router
26: aggregation node
27: OFC
28, 28': load balancer
30₁, 30₂: ISP (Internet Service Provider)
31₁, 31₂: RADIUS server
32: OpenFlow network
41: first network
42: second network
200, 200', 300, 300': OFC
201, 301: flow entry creation unit
202, 302: path calculation unit
203, 303: message transmission unit
204, 304: Packet_In identifying unit
205, 305: broadcast packet detection unit
206, 306: timer
207: VM load information acquisition command transmission unit
208: VM load information receiving unit
209: VM selection unit
211, 309: node communication unit
212: VM communication unit
213, 311: topology information storage unit
214, 313: user information storage unit
220: OVS
221: data plane
222: control plane
223: management plane
230, 230₁ to 230₃: virtual machine (VM)
240: control unit
250: server
307: OFS load monitoring unit
308: OFS selection unit
400: controller (CTRL)
401: port/switch selection unit
402: packet reception detection unit
403: switch information storage unit
500: communication control apparatus
501: first means (unit)
502: second means (unit)
503: packet (packet for establishing a session)
504₁ to 504ₙ: path
505₁ to 505ₙ: VM (virtual machine)
600: communication control apparatus
601: first means (unit)
602: second means (unit)
603: packet (packet for establishing a session)
604: network switch
605₁ to 605ₙ: path
606₁ to 606ₙ: VM (virtual machine)
700: forwarding destination narrowing down means

## Claims

1. A communication control apparatus in a communication system in which a virtual machine performs a communication function of a hardware appliance used in a communication network, the communication control apparatus comprising:
first means for selecting a forwarding destination of a packet that is forwarded towards a plurality of paths in order to establish a communication session with the communication function, from a plurality of the virtual machines; and
second means for forwarding the packet to a selected virtual machine.

2. The communication control apparatus according to claim 1, wherein
the first means selects a forwarding destination of the packet aggregated in the communication control apparatus, from a plurality of the virtual machines.

3. The communication control apparatus according to claim 1, wherein
the first means receives the packet from a network switch including a function of aggregating the packet into the communication control apparatus, and
selects a forwarding destination of the received packet, from a plurality of the virtual machines.

4. The communication control apparatus according to any one of claims 1 to 3, wherein
the first means selects a forwarding destination of the packet in such a manner that forwarding destinations of the packets are distributed among a plurality of the virtual machines.

5. The communication control apparatus according to any one of claims 1 to 4, wherein
the first means selects a forwarding destination of the packet according to operating conditions of a plurality of the virtual machines.

6. The communication control apparatus according to any one of claims 1 to 5, wherein
the first means receives the packet from a network switch configured to operate according to an instruction from the communication control apparatus, and
selects a forwarding destination of the received packet from a plurality of the virtual machines.

7. The communication control apparatus according to claim 6, wherein
upon reception of a request for an instruction regarding the packet from the network switch when the instruction corresponding to a method for processing the packet is unknown, the first means selects a forwarding destination of the packet from a plurality of the virtual machines according to the request.

8. The communication control apparatus according to claim 6, wherein
upon reception of the packet forwarded from the network switch according to an instruction given by the communication control apparatus, the first means selects a forwarding destination of the packet from a plurality of the virtual machines.

9. A communication control method in a communication system in which a virtual machine performs a communication function of a hardware appliance used in a communication network, the method comprising:
selecting a forwarding destination of a packet that is forwarded towards a plurality of paths in order to establish a communication session with the communication function, from a plurality of the virtual machines; and
forwarding the packet to a selected virtual machine.

10. The communication control method according to claim 9, comprising
selecting a forwarding destination of the packet aggregated in a communication control apparatus, from a plurality of the virtual machines.

11. The communication control method according to claim 9, comprising
receiving the packet from a network switch comprising a function of aggregating the packet in a communication control apparatus; and
selecting a forwarding destination of the received packet from a plurality of the virtual machines.

12. The communication control method according to any one of claims 9 to 11, comprising
selecting a forwarding destination of the packet in such a manner that forwarding destinations of the packets are distributed among a plurality of the virtual machines.

13. The communication control method according to any one of claims 9 to 12, comprising
selecting a forwarding destination of the packet according to the operating conditions of a plurality of the virtual machines.

14. The communication control method according to any one of claims 9 to 13, comprising:
receiving the packet from a network switch that operates according to an instruction from a communication control apparatus; and
selecting a forwarding destination of the received packet from a plurality of the virtual machines.

15. The communication control method according to claim 14, comprising
receiving a request for an instruction regarding the packet from the network switch, when an instruction corresponding to a method for processing the packet is unknown; and
selecting a forwarding destination of the packet from a plurality of the virtual machines according to the request.

16. The communication control method according to claim 14, comprising:
receiving the packet forwarded according to an instruction by the communication control apparatus from the network switch; and
selecting a forwarding destination of the packet from a plurality of the virtual machines.

17. A communication control program causing a communication control apparatus in a communication system in which a virtual machine performs a communication function of a hardware appliance used in a communication network to execute:
a process of selecting a forwarding destination of a packet that is forwarded towards a plurality of paths in order to establish a communication session with the communication function, from a plurality of the virtual machines; and
a process of forwarding the packet to a selected virtual machine.

18. A communication control apparatus in a communication system in which a virtual machine performs a communication function of a hardware appliance used in a communication network, the communication control apparatus comprising:
first means for selecting a forwarding destination of a packet that is forwarded towards a plurality of paths in order to establish a communication session with the communication function, from a plurality of the virtual machines; and
second means for instructing a network switch to forward the packet to a selected virtual machine.

19. A communication control method in a communication system in which a virtual machine performs a communication function of a hardware appliance used in a communication network, the method comprising:
selecting a forwarding destination of a packet that is forwarded towards a plurality of paths in order to establish a communication session with the communication function, from a plurality of the virtual machines; and
instructing a network switch to forward the packet to a selected virtual machine.

20. A communication apparatus in a communication system in which a virtual machine performs a communication function of a hardware appliance used in a communication network, the communication apparatus comprising:
means for identifying a packet that is forwarded towards a plurality of paths in order to establish a communication session with the communication function; and
means for aggregating the packet identified in an apparatus that forwards the packet to a virtual machine selected from a plurality of the virtual machines.

21. A communication method in a communication system in which a virtual machine performs a communication function of a hardware appliance used in a communication network, the method comprising:
identifying a packet that is forwarded towards a plurality of paths in order to establish a communication session with the communication function; and
aggregating the packet identified in an apparatus that forwards the packet to a virtual machine selected from a plurality of the virtual machines.

22. An information processing apparatus in which a virtual machine that performs a communication function of a hardware appliance used in a communication network is arranged, the information processing apparatus comprising:
means for operating a virtual switch that includes a function of a network switch, wherein
the virtual switch comprises
forwarding means for forwarding a packet that is forwarded towards a plurality of paths in order to establish a communication session with the communication function, to a virtual machine selected from a plurality of the virtual machines.

23. The information processing apparatus according to claim 22, wherein
the forwarding means of the virtual switch forwards the packet that is forwarded towards a plurality of paths in order to establish a communication session with the communication function, to a communication control unit, and
forwards the packet to a virtual machine selected by the communication control unit.

24. A communication method in an information processing apparatus in which a virtual machine that performs a communication function of a hardware appliance used in a communication network is provided, the method comprising:
operating a virtual switch that includes a function of a network switch; and
forwarding a packet that is forwarded towards a plurality of paths in order to establish a communication session with the communication function, to a virtual machine selected from a plurality of the virtual machines.

25. The communication method according to claim 24, comprising:
forwarding the packet that is forwarded towards a plurality of paths in order to establish a communication session with the communication function, to a communication control unit; and
forwarding the packet to a virtual machine selected by the communication control unit.

26. A communication system in which a virtual machine performs a communication function of a hardware appliance used in a communication network, the communication system comprising:
first means for selecting a forwarding destination of a packet that is forwarded towards a plurality of paths in order to establish a communication session with the communication function, from a plurality of the virtual machines; and
second means for forwarding the packet to a selected virtual machine.

27. The communication system according to claim 26, comprising third means for forwarding the packet that is forwarded towards a plurality of paths in order to establish a communication session with the communication function, to the first means.

28. A communication method in a communication system in which a virtual machine performs a communication function of a hardware appliance used in a communication network, the method comprising:
selecting a forwarding destination of a packet that is forwarded towards a plurality of paths in order to establish a communication session with the communication function, from a plurality of the virtual machines; and
forwarding the packet to a selected virtual machine.

29. The communication method according to claim 28, comprising forwarding the packet that is forwarded towards a plurality of paths in order to establish a communication session with the communication function, to the first means.

30. A communication system comprising
means for selecting, upon reception of at least a packet that is forwarded towards a plurality of paths, at least one forwarding destination for the packet; and for forwarding the packet to the selected forwarding destination.

31. The communication system according to claim 30, wherein
the means includes
a node that aggregates a packet that is broadcasted over a network and
forwards the packet to the selected forwarding destination via unicast.

32. The communication system according to claim 30 or 31, comprising:
at least one switch including a plurality of ports that forward a packet, wherein
the switch gives a notification to a control apparatus upon reception of the packet that is forwarded towards a plurality of paths, and
the control apparatus instructs the packet to be forwarded from a port of the switch corresponding to the selected forwarding destination.

33. The communication system according to claim 32, wherein
the control apparatus sets a processing rule regarding packet forwarding in the switch, and
the switch forwards a received packet according to the processing rule set by the control apparatus.

34. The communication system according to claim 32 or 33, comprising:
a line multiplexer that concentrates a plurality of lines, wherein
the line multiplexer comprises the switch and forwards the packet to the selected forwarding destination.

35. The communication system according to claim 34, comprising
a load balancer apparatus that determines a forwarding destination of the packet.

36. The communication system according to claim 35, comprising:
a line multiplexer that concentrates a plurality of lines; and
a load balancer apparatus that determines a forwarding destination of the packet, the packet being forwarded to a forwarding destination determined by the load balancer apparatus.

37. The communication system according to claim 32 or 33, wherein the control apparatus is connected to a plurality of the switches, a plurality of the switches, each, upon reception of a packet that is forwarded towards a plurality of paths, notify the control apparatus that the packet has been received, and
the control apparatus first starts a timer when receiving the notification from the switch that the packet has been received, and
the control apparatus selects at least one of the ports or a switch corresponding to the port upon occurrence of a timeout.

38. The communication system according to any one of claims 32, 33, and 37, wherein
each of a plurality of the switches is connected to one or more network function units via one or more ports,
the control apparatus is connected to a plurality of the network function units connected to a plurality of the switches,
the control apparatus, upon reception of a notification from the switch that the packet that is forwarded towards a plurality of paths has been received, selects at least one of the network function units on the basis of the load on a plurality of the network function units, and
the control apparatus instructs a switch including a port connected to the selected network function unit to forward the packet to the selected network function unit from the port.

39. The communication system according to claim 38, wherein the network function unit is a virtual machine virtualized on a virtualization infrastructure of a server.

40. The communication system according to any one of claims 32, 33, and 37, wherein a switch that gives a notification to the control apparatus when receiving the packet that is forwarded towards a plurality of paths is disposed on a boundary between a network constituted by the switch and the other network.

41. A control apparatus comprising:
means for receiving a notification of reception of a packet that is forwarded towards a plurality of paths from a switch that has received the packet; and
means for controlling so as to select at least one forwarding destination for the packet and to forward the packet to a selected forwarding destination.

42. A communication method comprising:
selecting, upon reception of at least a packet that is forwarded towards a plurality of paths, at least one forwarding destination for the packet; and
forwarding the packet to a selected forwarding destination.

43. A program causing a computer to execute:
a process of selecting, upon reception of at least a packet that is forwarded towards a plurality of paths, at least one forwarding destination for the packet and forwarding the packet to a selected forwarding destination.
